# EUROPÄISCHE PATENTSCHRIFT

(11) **EP 2 668 080 B1**
(45) Veröffentlichungstag und Bekanntmachung des Hinweises auf die Patenterteilung: **30.04.2014**
(21) Anmeldenummer: 12701006.4
(22) Anmeldetag: 26.01.2012
(51) Int. Cl.: B61D 17/10, B61D 17/20, B60D 5/00

(54) **SCHIENENFAHRZEUGBRÜCKE**
RAIL VEHICLE BRIDGE
PASSERELLE DE VÉHICULE FERROVIAIRE

(30) Priorität: 28.01.2011 DE 102011009767
(43) Veröffentlichungstag der Anmeldung: 04.12.2013
(73) Patentinhaber: Bombardier Transportation GmbH, 10785 Berlin (DE)
(72) Erfinder: PALDAN, Frantisek, 83107 Bratislava (SK); STEININGER, Franz, 2103 Langenzersdorf (AT); STEINER, Stefan, 1230 Wien (AT); FIEDLER, Thomas, 1190 Wien (AT)
(74) Vertreter: Patentanwälte Bressel und Partner mbB
(86) Internationale Anmeldenummer: PCT/EP2012/051196
(87) Internationale Veröffentlichungsnummer: WO 2012/101201

(56) Entgegenhaltungen:
- EP-A1- 1 854 691
- DE-A1- 2 729 883
- DE-C1- 19 860 557
- DE-U1-202009 010 163
- US-A- 4 579 063

## Beschreibung

Die vorliegende Erfindung betrifft eine Schienenfahrzeugbrücke mit einer speziell gelagerten und insbesondere einfach zu demontierenden Drehscheibe.

Gelenkig miteinander verbundene Fahrzeugteile eines Busses oder Schienenfahrzeugs müssen bei ihrer Fahrt den unterschiedlichsten Bewegungen folgen können. So muss die gelenkige Verbindung insbesondere Knickbewegungen ermöglichen, wie sie auftreten, wenn das Fahrzeug durch eine Kurve fährt. Darüber hinaus müssen Nickbewegungen ermöglicht werden, wie sie auftreten, wenn das Fahrzeug über eine Kuppe oder durch eine Senke fährt. Im gewissen Umfang sollen auch Wankbewegungen (Torsionsbewegungen) erlaubt werden können, wie sie beispielsweise auftreten, wenn die Fahrzeugteile gegeneinander um die Fahrzeuglängsachse verdreht werden. Darüber hinaus ist zu beachten, dass die beschriebenen Bewegungen auch einander überlagert auftreten können.

Zwischen den gelenkig miteinander verbundenen Fahrzeugteilen befindet sich im Bodenbereich eine Übergangsbrücke, im Fall eines Schienenfahrzeugs eine sog. Schienenfahrzeugbrücke. Die Übergangsbrücke ermöglicht den in dem Fahrzeug befindlichen Personen den Übergang von einem Fahrzeugteil in den anderen Fahrzeugteil. Ein Teil der Übergangsbrücke ist eine sogenannte Drehscheibe. Sie ist mit einem Ende, das oftmals die Form eines Kreisbogens hat, relativ zu einer benachbarten Bodenplatte eines der Fahrzeugteile drehbar, und sie ist mit einem anderen Ende, das oftmals gerade ist, mit Bodenplatten oder Brückenplatten des anderen Fahrzeugteils nicht drehbar verbunden. Insbesondere im Bereich einer Drehscheibe ergeben sich bei Kurvenfahrt, also bei einer Knickbewegung und gegebenenfalls überlagerten Wank- und Nickbewegungen, überaus komplexe Bewegungsabläufe im Bereich der Drehscheibe, wenn man beispielsweise einen Punkt auf dem äußeren Umfang der Drehscheibe betrachtet. Bei bisherigen Konstruktionen wird eine Drehscheibe an einem kreisbogenförmigen Ende durch Gleitelemente im ersten Fahrzeugteil geführt Insbesondere bei Fahrten durch Senken oder über Kuppen können die Gleitelemente stark belastet werden.

Die EP 1854691 schlägt eine Lösung vor, bei der eine Drehscheibe mit ihrem einen Ende durch ein elastisches Zwischenglied mit dem Boden eines Fahrzeugteils verbunden ist, wodurch komplexe Bewegungsabläufe ohne Schaden für die Drehscheibe ausgeführt werden können, da die hierbei auftretenden Bewegungen von dem elastischen Bodenteil aufgenommen werden. Nachteilig bei dieser Lösung ist, dass elastische Bodenteile für Fahrgäste unsicher wirken können. Weiterhin nachteilig ist, dass bei der Lösung der EP 1854691 die Drehscheibe durch viele Schraubverbindungen mit dem elastischen Zwischenglied verbunden ist, die zur Demontage der Drehscheibe zwecks Wartung des darunter liegenden Wagengelenks gelöst werden müssen.

DE 202009010163 U1 offenbart eine gattungsgemäße Schienenfahrzeugbrücke und betrifft einen Übergang zwischen zwei gelenkig miteinander verbundenen Fahrzeuggliedern, zwischen welchen ein Brückenelement und ein Faltenbalg angeordnet sind. Offenbart wird ein Brückenelement, welches in einem ersten Endbereich am ersten Fahrzeugteil bzw. an einem diesem zugeordneten Auflageelement und in einem dem ersten Endbereich gegenüberliegenden zweiten Endbereich am zweiten Fahrzeugteil bzw. an einem diesem zugeordneten Auflageelement angelenkt ist. Das Brückenelement weist beispielsweise kreisbogenförmige axiale Endbereiche auf, welche als halbkreisförmige, mittels Scharnierelementen an einen im Wesentlichen rechteckigen zusätzlichen Abschnitt des Brückenelementes angelenkte Plattenelemente ausgeführt sind (Fig. 18). Die Plattenelemente sind jeweils in einer korrespondierenden Führungsaufnahme eines am Fahrzeugglied angebrachten Rahmenkastens gelagert, wobei jeder Brückenelemente-Endbereich bzw. jedes Plattenelement mittels einer seitlichen Lagerungseinheit mit dem jeweils zugeordneten Rahmenkasten gelenkig verbunden ist. Zur Demontage des Brückenelements können die kreisbogenförmigen Plattenelemente nur zusammen mit dem zusätzlichen, mittleren Abschnitt entnommen werden, was die Demontage erschwert.

Die Aufgabe der Erfindung bestand darin, eine Schienenfahrzeugbrücke mit einer Drehscheibe zur Verfügung zu stellen, welche die oben bezeichneten Nachteile des Standes der Technik nicht aufweist oder zumindest teilweise überwindet.

Eine erfindungsgemäße Lösung betrifft eine Schienenfahrzeugbrücke nach Anspruch 1. Angegeben wird eine Schienenfahrzeugbrücke zur Überbrückung eines Übergangs zwischen einem ersten Fahrzeugteil und einem zweiten Fahrzeugteil, die durch ein Gelenk miteinander verbunden sind, wobei die Schienenfahrzeugbrücke
- eine Drehscheibe, mit einem ersten Rand und einem zweiten Rand,
- eine Führung, die am ersten Fahrzeugteil angeordnet ist, und in welcher der erste Rand der Drehscheibe drehbar zum ersten Fahrzeugteil geführt ist,
- mindestens eine Brückenplatte, die mit dem zweiten Rand der Drehscheibe verbunden ist,
aufweist,
wobei
- die Drehscheibe auf einer ersten Gleitfläche eines unter der Drehscheibe angeordneten und am ersten Fahrzeugteil angeordneten Lagers aufliegt und auf der ersten Gleitfläche des Lagers drehbar gelagert ist, und
wobei nach Ausbau der Brückenplatte(n) die Drehscheibe in Richtung des zweiten Fahrzeugteils auf der ersten Gleitfläche des Lagers verschiebbar und aus der Führung entnehmbar ist.

Die Verbindung der Drehscheibe an ihrem zweiten Rand mit der mindestens einen Brückenplatte kann beispielsweise eine Schraubverbindung oder jede andere denkbare Verbindung sein.

Eine speziellere erfindungsgemäße Lösung ist eine Schienenfahrzeugbrücke zur Überbrückung eines Übergangs zwischen einem ersten Fahrzeugteil und einem zweiten Fahrzeugteil, die durch ein Gelenk miteinander verbunden sind, wobei die Schienenfahrzeugbrücke
- eine Drehscheibe mit einem ersten Rand und einem zweiten Rand,
- eine Führung, die am ersten Fahrzeugteil angeordnet ist, und in welcher der erste Rand der Drehscheibe drehbar zum ersten Fahrzeugteil geführt ist,
- mindestens eine Brückenplatte, die mit dem zweiten Rand der Drehscheibe verbunden ist,
aufweist, wobei
- die Drehscheibe auf einer ersten Gleitfläche eines unter der Drehscheibe und am ersten Fahrzeugteil angeordneten Lagers aufliegt und auf der ersten Gleitfläche des Lagers drehbar gelagert ist, und
- die Drehscheibe an ihrem zweiten Rand über eine Steckverbindung mit der mindestens einen Brückenplatte verbunden ist,
und wobei nach Lösen der Steckverbindung und Anheben und/oder Ausbau der Brückenplatte(n) die Drehscheibe auf der ersten Gleitfläche des Lagers verschiebbar und dadurch aus der Führung entnehmbar ist.

Bei dieser Lösung ist die Drehscheibe an ihrem zweiten Rand über eine Steckverbindung, welche noch eingehender erläutert wird, mit der mindestens einen Brückenplatte verbunden. Die Steckverbindung kann insbesondere durch ein spezielles Verbindungselement erfolgen, das ebenfalls noch erläutert ist.

Nach einer grundlegenden Idee der Erfindung liegt die Drehscheibe auf einem Lager auf und sie kann sich auf der ersten Gleitfläche des Lagers drehen. Im Fahrbetrieb dreht sich die Drehscheibe bei einer Kurvenfahrt des Fahrzeugs auf der Gleitfläche des Lagers. Der erste Rand der Drehscheibe ist beispielsweise kreisbogenförmig, insbesondere halbkreisförmig, und grenzt an das erste Fahrzeugteil an, beispielsweise an eine Bodenplatte des ersten Fahrzeugteils. Der erste Rand ist gegenüber dem ersten Fahrzeugteil beweglich, so dass die Drehscheibe gegenüber dem ersten Fahrzeugteil verdrehbar ist. Die Drehung der Drehscheibe erfolgt um eine zur Drehscheibe (bzw. zur Oberfläche der Drehscheibe) vertikale Drehachse. Der zweite Rand der Drehscheibe, der beispielsweise nicht kreisbogenförmig und insbesondere gerade ist, grenzt an eine oder mehrere Brückenplatte(n) an, die am zweiten Fahrzeugteil angeordnet ist/sind.

Die Drehscheibe ist gemäß der spezielleren Ausführungsform an ihrem zweiten Rand über eine Steckverbindung mit der mindestens einen Brückenplatte verbunden Zur der Demontage der Drehscheibe wird eine Steckverbindung zwischen Drehscheibe und Brückenplatte(n) gelöst, was ohne Lösen von Schrauben oder anderen Befestigungselementen möglich ist. Die Brückenplatten werden angehoben oder gänzlich demontiert. Danach kann die Drehscheibe auf der Gleitfläche des Lagers in Richtung der Stelle(n) verschoben werden, wo zuvor die Brückenplatte(n) eingebaut waren. Dies ist die Richtung des zweiten Fahrzeugteils, da die Brückenplatten(n) am zweiten Fahrzeugteil angeordnet sind. Beim Verschieben der Drehscheibe wird der erste Rand in horizontaler Richtung aus der Führung am ersten Fahrzeugteil herausgezogen und die Drehscheibe kann nach oben entnommen werden. Das Lager ist am ersten Fahrzeugteil angeordnet, insbesondere am ersten Fahrzeugteil befestigt. Die Drehscheibe ist über die Brückenplatte(n) mit dem zweiten Fahrzeugteil verbunden und sie ist nicht gegen das zweite Fahrzeugteil drehbar. Das erste Fahrzeugteil kann das in Fahrtrichtung vordere Fahrzeugteil sein und das zweite Fahrzeugteil ist dahinter angeordnet, oder auch umgekehrt. Am ersten Fahrzeugteil kann als weiteres Element der Schienenfahrzeugbrücke eine Bodenplatte vorhanden sein, die insbesondere am ersten Fahrzeugteil befestigt ist und an welche die Drehscheibe angrenzt. Die Führung für den ersten Rand der Drehscheibe ist am ersten Fahrzeugteil angeordnet, beispielsweise am Rand einer am ersten Fahrzeugteil angeordneten Bodenplatte.

Dass das Lager am ersten Fahrzeugteil angeordnet ist, bedeutet in einer Variante, dass das Lager an einer Stelle des ersten Fahrzeugteils, beispielsweise an einer Gelenkpfanne des Gelenks oder an einem Gelenkträger, unbeweglich fixiert ist. In einer anderen Variante ist das Lager verschiebbar oder verschwenkbar am ersten Fahrzeugteil angeordnet, so dass es sich relativ zum ersten Fahrzeugteil bewegen kann, dabei aber mit dem ersten Fahrzeugteil verbunden bleibt. Eine genauere Beschreibung dieser Varianten wird noch gegeben.

Das Lager ist vorzugsweise zwischen der Drehscheibe und einem Gelenk, das die beiden Fahrzeugteile miteinander verbindet, angeordnet. Anders ausgedrückt ist das Lager vorzugsweise oberhalb eines Gelenks angeordnet. Das Lager kann beispielsweise auf einer Gelenkpfanne oder einem Gelenkträger angeordnet sein. Das Lager muss nicht direkt auf dem Gelenk aufsitzen. Es können anderweitige Bauteile zwischen Gelenk und Lager vorhanden sein, wie Abstandhalter, Träger, Platten etc. Das Gelenk zwischen den Fahrzeugteilen ermöglicht die eingangs genannten Knickbewegungen der Fahrzeugteile zueinander und vorzugsweise auch Nickbewegungen und Wankbewegungen.

Die Drehbewegung der Drehscheibe auf dem Lager wird vorzugsweise von einem Führungselement geführt. Das Führungselement ist von der am ersten Fahrzeugteil angeordneten Führung für den ersten Rand der Drehscheibe zu unterscheiden. Das Führungselement führt zusätzlich zu der am ersten Fahrzeugteil angeordneten Führung die Drehbewegung der Drehscheibe und verhindert, dass der erste Rand der Drehscheibe in montiertem Zustand die am ersten Fahrzeugteil vorgesehene Führung verlässt, beispielsweise durch Herausrutschen aus der Führung. Das Führungselement kann in speziellen Ausführungsformen der Erfindung eine Verschiebung der Drehscheibe auf der ersten Gleitfläche des Lagers soweit zulassen, dass der erste Rand der Drehscheibe in montiertem Zustand die am ersten Fahrzeugteil vorgesehene Führung nicht verlässt. In diesem Fall dient das Führungselement auch als Anschlag, der eine Translationsbewegung der Drehscheibe auf dem Lager begrenzt.

Das soeben beschriebene Führungselement kann am Lager angeordnet sein oder an der Drehscheibe. Das Führungselement kann ein am Lager befestigter Zapfen sein, der in ein Loch in der Drehscheibe eingreift, wie nachfolgend noch beschrieben. Zur Demontage der Drehscheibe wird das Führungselement aus einer Befestigung gelöst und gegebenenfalls entfernt, so dass es seine Funktion nicht mehr ausüben kann.

An ihrem zweiten Rand, der dem am ersten Fahrzeugteil geführten ersten Rand gegenüberliegt und zum zweiten (in Fahrtrichtung beispielsweise hinteren) Fahrzeugteil hin orientiert ist, ist die Drehscheibe insbesondere, gemäß der oben beschriebenen spezielleren Ausführungsform, über eine Steckverbindung mit mindestens einer Brückenplatte verbunden. Der zweite Rand ist vorzugsweise gerade. Eine Brückenplatte ist eine Platte, die den Abstand zwischen dem zweiten Rand der Drehscheibe und dem Boden des zweiten Fahrzeugteils überbrückt. Die Steckverbindung zu der mindestens einen Brückenplatte ist im Wartungsfall schnell und leicht lösbar, im Gegensatz zu einer aus dem Stand der Technik bekannten Verschraubung.

Zur Demontage der Drehscheibe wird die Steckverbindung zwischen Drehscheibe und Brückenplatte gelöst. Danach kann die Brückenplatte angehoben oder beispielsweise nach Lösen gegebenenfalls vorhandener weiterer Verbindungen ganz entfernt werden. Außerdem wird, sofern vorhanden, ein zuvor erläutertes Führungselement gelöst. Im nächsten Schritt kann die Drehscheibe auf der ersten Gleitfläche des Lagers verschoben werden. Die Drehscheibe wird so verschoben, dass der erste Rand der Drehscheibe aus der am ersten Fahrzeugteil angeordneten Führung herausgezogen und freigelegt wird. Somit wird durch das Verschieben die Drehscheibe aus der am ersten Fahrzeugteil angeordneten Führung entnommen und kann anschließend durch Anheben entfernt werden. Nach Anheben der Drehscheibe und Demontage ist der Zugang zum Fahrzeugteilgelenk zwecks Wartung möglich.

Nachfolgend werden die einzelnen Merkmale der Erfindung und bevorzugte Ausführungsformen näher erläutert.

Der in der Führung am ersten Fahrzeugteil geführte erste Rand der Drehscheibe hat vorzugsweise die Form eines Kreisbogens. Die Führung kann beispielsweise ein oder mehrere Gleitleisten aufweisen, wie in EP 1 854 691, Fig. 5 und Fig. 6 beschrieben. Eine oder mehrere Gleitleisten können über dem ersten Rand der Drehscheibe angeordnet sein. Zusätzlich können eine oder mehrere Gleitleisten unter dem ersten Rand angeordnet sein, wobei die oberen und unteren Gleitleisten zueinander vorzugsweise parallel verlaufen.

In einer weiteren Ausführungsform hat die Führung im Querschnitt ein C-förmiges Profil. Bevorzugt ist der obere Schenkel des C-Profils aus einer oder mehreren nebeneinander angeordneten Gleitleisten gebildet. Noch mehr bevorzugt ist auch der untere Schenkel des C-Profils aus einer oder mehreren nebeneinander angeordneten Gleitleisten gebildet. Der senkrechte Schenkel des C-Profils kann ein Distanzstück bzw. Abstandhalter zwischen den Gleitleisten sein. Genauere Erläuterungen der Führung werden später in dieser Beschreibung noch gegeben.

Der erste Rand der Drehscheibe ist vorzugsweise mit Spiel in horizontaler Richtung und mehr bevorzugt auch in vertikaler Richtung in der Führung geführt, damit die Fahrzeugbrücke die eingangs beschriebenen Nick- und Wankbewegungen der Fahrzeugteile besser nachvollziehen kann. Beispielsweise kann der erste Rand in der Führung so geführt sein, dass zwischen der Stirnseite des ersten Randes und einem gegenüberliegenden Rand der Führung, oder zwischen der Stirnseite des ersten Randes und einer Bodenplatte des ersten Fahrzeugteils (s. dazu beispielsweise Fig. 6 von EP 1854691) ein horizontaler Spalt gebildet ist. Außerdem kann zwischen dem ersten Rand und benachbarten Gleitleisten ein vertikaler Spalt gebildet ein, beispielsweise ein vertikaler Spalt zwischen dem ersten Rand und einer darüber liegenden Gleitleiste und/oder ein vertikaler Spalt zwischen dem ersten Rand und einer darunter liegenden Gleitleiste. Bei einer Bewegung der Drehscheibe innerhalb der Führung in horizontaler oder vertikaler Richtung verlässt sie die Führung nicht und bleibt für Drehbewegungen geführt.

Die Fahrzeugteile können beispielsweise Wagen, Waggons oder Wagenkästen, oder Teile davon, eines Schienenfahrzeugs sein. Beide Fahrzeugteile, oder auch nur eines davon, kann einen eigenen Antrieb aufweisen. Der erste Fahrzeugteil kann in Fahrtrichtung vor dem zweiten Fahrzeugteil angeordnet sein oder umgekehrt.

Eine Steckverbindung kann derart ausgeführt sein, dass die Drehscheibe und die mindestens eine Brückenplatte ohne Verbindungselement, also direkt, ineinander gesteckt werden.

Eine Steckverbindung zwischen der Drehscheibe und der Brückenplatte erfolgt in einer anderen Ausführungsform über ein Verbindungselement, das vorzugsweise elastisch ist, zwischen der Drehscheibe und der Brückenplatte angeordnet ist und die Drehscheibe und Brückenplatte miteinander verbindet.

Das Verbindungselement ist in einer speziellen Ausführungsform mit der Drehscheibe und/oder der Brückenplatte so zusammengesteckt, das es von der Drehscheibe und/oder der Brückenplatte lösbar ist, insbesondere durch Herausziehen. Die Steckverbindung kann beispielsweise von Hand oder mit einem geeigneten Werkzeug gelöst werden, wobei eine Lösbarkeit von Hand ganz besonders vorteilhaft ist. In dieser Ausführungsform existiert zwischen der Drehscheibe und dem Verbindungselement eine lösbare Steckverbindung und/oder zwischen der Brückenplatte und dem Verbindungselement existiert eine lösbare Steckverbindung. Durch Lösen des Verbindungselements von der Drehscheibe und/oder der Brückenplatte wird die Steckverbindung zwischen der Drehscheibe und der Brückenplatte gelöst. Vorzugsweise wird das Verbindungselement entweder von der Drehscheibe oder von der Brückenplatte gelöst und bleibt mit dem jeweils anderen Bauteil (Drehscheibe oder Brückenplatte) fest verbunden. Dies bedeutet insbesondere, dass die Verbindung zwischen dem anderen Element und dem Verbindungselement nicht von Hand lösbar ist. Denkbar sind z.B. eine Klebeverbindung, eine Klemmverbindung oder eine nicht (von Hand) lösbare Steckverbindung. Das andere Bauteil ist die Drehscheibe, wenn zwischen der Brückenplatte und dem Verbindungselement eine lösbare Steckverbindung existiert. Das andere Bauteil ist die Brückenplatte, wenn zwischen der Drehscheibe und dem Verbindungselement eine lösbare Steckverbindung existiert. Dies bedeutet vorzugsweise: Ist das Verbindungselement von der Drehscheibe lösbar, so ist es mit der Brückenplatte fest verbunden und umgekehrt. Der Vorteil dieser Ausführungsform liegt darin, dass das Verbindungselement bei der Demontage der Drehscheibe an entweder der Drehscheibe oder der Brückenplatte verbleibt und dass das Verbindungselement bei der Demontage nur von entweder der Drehscheibe oder der Brückenplatte gelöst wird. In einer sehr bevorzugten Variante ist das Verbindungselement mit der Drehscheibe so zusammengesteckt, das es von Hand von der Drehscheibe lösbar ist, beispielsweise durch Herausziehen. Das Verbindungselement verbleibt an der Brückenplatte und die Brückenplatte kann, ggf. nach Lösen weiterer Verbindungen zwischen Brückenplatte und anderen Boden- oder Brückenplatten, zusammen mit dem Verbindungselement entnommen werden.

Es sind auch Varianten denkbar, in denen das Verbindungselement sowohl von der Drehscheibe als auch von der Bodenplatte lösbar ist, und bei der Demontage von beiden gelöst wird.

Das Verbindungelement ist vorzugsweise ein elastisches Verbindungselement, insbesondere eine elastische Profilleiste. Geeignete Materialien sind natürliche und synthetische Elastomere, wie Gummi.

Eine lösbare, insbesondere von Hand lösbare, Steckverbindung ist beispielsweise so ausgeführt, dass am zweiten Rand der Drehscheibe eine Nut vorgesehen ist und das Verbindungselement eine Profilleiste ist, die eine komplementär zur Nut ausgeformte Basis aufweist. Die Basis ist bei geschlossener Steckverbindung in die Nut an der Drehscheibe gesteckt. Die Nut ist vorzugsweise nach oben geöffnet. Zum Lösen der Steckverbindung wird die Basis aus der Nut gezogen, beispielsweise durch Ziehen an dem Verbindungselement nach oben.

Alternativ ist eine lösbare, insbesondere von Hand lösbare, Steckverbindung so ausgeführt, dass an der an die Drehscheibe angrenzenden Seite der Brückenplatte(n) eine Nut vorgesehen ist und das Verbindungselement eine Profilleiste ist, die eine komplementär zur Nut ausgeformte Basis aufweist. Die Basis ist bei geschlossener Steckverbindung in die Nut an der Brückenplatte(n) gesteckt. Die Nut ist vorzugsweise nach oben geöffnet. Zum Lösen der Steckverbindung wird die Basis aus der Nut gezogen, beispielsweise durch Ziehen an dem Verbindungselement nach oben.

In einer speziellen Ausführungsform wird ein Verbindungselement in Form eines elastischen Profils eingesetzt, das folgende Merkmale aufweist:
- eine Basis, die in eine am zweiten Rand der Drehscheibe angebrachte Nut einsteckbar ist,
- eine nutförmige Ausnehmung zur Aufnahme eines nach unten weisenden Schenkels der Brückenplatte(n),
- optional eine erste Lippe zur oberseitigen Abdeckung des zweiten Randes der Drehscheibe, und
- eine zweite Lippe, die über dem nach unten weisenden Schenkel der Brückenplatte(n) angeordnet ist und einen Rand der Brückenplatte(n) oberseitig abdeckt.

Bei einem solchen Verbindungselement wird zum Lösen der Steckverbindung zwischen Drehscheibe und Brückenplatte die zweite Lippe angehoben. Danach wird die Brückenplatte angehoben und der nach unten weisende Schenkel der Brückenplatte(n) aus der nutförmigen Ausnehmung herausgezogen. Infolgedessen sind Drehscheibe und Brückenplatte voneinander getrennt.

In einer Variante ist die erste Lippe vorhanden und zwischen der ersten und der zweiten Lippe ist eine Ausnehmung vorhanden, in die ein Profilstrang eingebracht ist. Der Profilstrang ist aus der Ausnehmung entnehmbar. Beispielsweise ist der Profilstrang in die Ausnehmung zwischen den Lippen eingepresst oder eingesteckt. Der Profilstrang ist vorzugsweise keilförmig und wird mit der Keilspitze nach unten weisend in eine komplementär geformte Ausnehmung zwischen den Lippen eingebracht. Der Profilstrang dient der Versteifung des elastischen Profils zwischen der ersten und zweiten Lippe. Der Profilstrang ist vorzugsweise aus einem Material, das weniger elastisch ist als das Material des elastischen Profils, in das er eingebracht ist, insbesondere weniger elastisch als das Material der ersten und zweiten Lippe, zwischen denen er angeordnet ist. In einer speziellen Ausführungsform ist der Profilstrang aus einem nicht elastischen Material, vorzugsweise einem nicht elastomeren Kunststoff, beispielsweise Polyamid. In einer anderen Variante, die mit den vorherigen kombinierbar ist, ist der Profilstrang aus einem Material, das eine höhere Steifigkeit aufweist als das Material des elastischen Profils, in das er eingebracht ist, insbesondere eine höhere Steifigkeit als das Material der ersten und zweiten Lippe, zwischen denen er angeordnet ist.

Zum Lösen der Steckverbindung kann der Profilstrang aus seiner Position zwischen den beiden Lippen entnommen werden. Danach kann die zweite Lippe angehoben werden, was durch die fehlende Versteifung zwischen den Lippen und die nicht durch den Profilstrang ausgefüllte Ausnehmung zwischen den Lippen erleichtert ist. Nach dem Anheben der zweiten Lippe ist der Rand der Brückenplatte(n) nicht mehr verdeckt und die Brückenplatte(n) können aus dem Verbindungselement entnommen werden, wodurch die Steckverbindung zwischen Drehscheibe und Brückenplatte gelöst wird.

Das Verbindungselement ermöglicht eine Steckverbindung zwischen der Drehscheibe und der Brückenplatte(n). Im Gegensatz zu Lösungen aus dem Stand der Technik, wo Drehscheiben mit benachbarten Bodenelementen, Brückenelementen oder einem elastischen Zwischenglied verschraubt sind, erlaubt die spezielle erfindungsgemäße Lösung mit einer Steckverbindung eine besonders einfache Wartung und Montage/Demontage. Die Montage/Demontage einer Steckverbindung mit einem solchen Verbindungselement ist in den Ausführungsbeispielen erläutert.

Die Nut der Drehscheibe, in welche die Basis des Verbindungselements einsteckbar ist, befindet sich am zweiten Rand der Drehscheibe und ist offen und damit von oben zugänglich. Die Nut und der nach unten weisende Schenkel der Brückenplatte(n) verlaufen im Wesentlichen parallel. Somit verlaufen auch die nutförmige Ausnehmung in dem Verbindungselement und die Basis des Verbindungselements im Wesentlichen parallel.

Prinzipiell kann die Nut am zweiten Rand der Drehscheibe in jeder denkbaren Weise an der Drehscheibe angeordnet sein. In einer speziellen Ausführungsform ist die Nut in einer Profilleiste gebildet, vorzugsweise aus Metall, die mit der Drehscheibe verbunden ist.

Die nutförmige Ausnehmung des Verbindungselements zur Aufnahme eines nach unten weisenden Schenkels der Brückenplatte(n) ist vorzugsweise im Bereich der Basis des Verbindungselements angeordnet und von oben zugänglich.

Der Begriff "Abdeckung eines Randes" bedeutet mit Bezug auf die erste Lippe und die Drehscheibe nicht zwingend auch eine Abdeckung der Nut an der Drehschiebe. In diese Nut wird die Basis des Verbindungselements eingesteckt und sie wird nicht zwingend auch von der ersten Lippe abgedeckt.

Erfindungsgemäß können eine oder mehrere Brückenplatten vorgesehen sein, die in Fahrtrichtung hintereinander und/oder nebeneinander angeordnet sein können. Vorteilhaft ist eine Anordnung aus drei nebeneinander liegenden dreieckigen Brückenplatten, die sich in der Draufsicht zu einem Rechteck ergänzen und untereinander mit elastischen Leisten verbunden sind, vorzugsweise mit einer Steckverbindung. Dazu können die gleichen Verbindungselemente eingesetzt werden wie oben beschrieben. Durch eine Anordnung aus mehreren Brückenplatten können Wankbewegungen beim Verdrehen der Fahrzeuge gegeneinander sehr gut von der Schienenfahrzeugbrücke nachvollzogen werden.

In einer speziellen Ausführungsform ist das Führungselement ein Zapfen, der am Lager an höherer Position als die erste Gleitfläche angeordnet ist und der demontierbar ist. Anders ausgedrückt ist das Führungselement ein Zapfen, der am Lager oberhalb der ersten Gleitfläche angeordnet ist. Der Zapfen ist insbesondere am Lager oberhalb der ersten Gleitfläche befestigt, z.B. mit einer Schraubverbindung. Der Zapfen ist demontierbar, um nach dem Lösen der Steckverbindung und dem Anheben und/oder Ausbau der Brückenplatte(n) ein Verschieben der Drehscheibe und ein Entnehmen der Drehscheibe aus der Führung zu ermöglichen. In dieser Ausführungsform weist die Drehscheibe ein Loch auf, in das der Zapfen eingreift, wobei die Drehscheibe um den Zapfen drehbar gelagert ist.

Die Mittelachse des Zapfens und die Drehachse des darunter liegenden Gelenks können zueinander axial fluchtend sein. Dann verläuft die Zapfenachse durch den Drehpunkt des Gelenks. Es werden aber nachfolgend auch Ausführungsformen beschrieben, bei denen sich die Zapfenachse in ihrer Position relativ zur Drehachse des Gelenks verschieben kann. Das Loch in der Drehscheibe, in das der Zapfen eingreift, befindet sich vorzugsweise direkt im geometrischen Zentrum der Drehscheibe, insbesondere im Mittelpunkt einer kreis- oder halbkreisförmigen Drehscheibe, wobei der Mittelpunt der halbkreisförmigen Drehscheibe der Kreismittelpunkt ist, wenn man den Halbkreis gedanklich zu einem Vollkreis ergänzt.

Der Zapfen kann beispielsweise als Scheibe oder Ring mit kreisförmigem Umfang ausgeführt sein. Wie erwähnt, ist der Zapfen vorzugsweise am Lager befestigt, aber demontierbar. Der Zapfen kann fest mit einem Bauteil verbunden sein, das zumindest einen Teil der ersten Gleitfläche des Lagers, oder die gesamte Gleitfläche, aufweist. Oder der Zapfen kann mit einem Bauteil verbunden sein, das ein Gleitelement mit einer ersten Gleitfläche trägt. Der Zapfen kann auch fest mit einem Bauteil verbunden sein, das unter einem Gleitelement mit einer ersten Gleitfläche angeordnet ist. Die Befestigung des Zapfens am Lager erfolgt vorzugsweise mit einer Schraube, die vorzugsweise in der Mitte des Zapfens positioniert ist.

Das Lager kann insbesondere folgende Komponenten aufweisen:
- eine Platte, die eine Einrichtung zur Befestigung eines Zapfens aufweist,
- ein über der Platte angeordnetes erstes Gleitelement, das die erste Gleitfläche des Lagers aufweist,
- einen Zapfen, der an der Platte fixierbar ist und im fixierten Zustand über der Platte und über dem Gleitelement, d.h. oberhalb der Platte und oberhalb des Gleitelements, angeordnet ist.

Die Fixierung des Zapfens kann mit einem Befestigungsmittel erfolgen, vorzugsweise mit einer Schraube. Die Einrichtung zur Befestigung eines Zapfens in der Platte kann eine Einrichtung zur Aufnahme eines Befestigungsmittels für den Zapfen sein, beispielsweise ein Gewinde zum Anschrauben eines Zapfens, das in der Platte vorgesehen ist.

Die Platte ist vorzugsweise aus Metall und wird beispielsweise über dem Gelenk, das die Fahrzeugteile miteinander verbindet, befestigt, beispielsweise auf einem Gelenkträger oder einer Gelenkpfanne. Das Gleitelement hat beispielsweise ebenfalls die Form einer Platte, bevorzugt mit gleichem Umriss wie die darunter liegende Platte. Vorzugsweise besteht das Gleitelement aus einem Kunststoff mit einem geringen Reibungskoeffizienten gegenüber Stahl, beispielsweise Polyamid.

Bei dem Zusammenbau sind verschiedene Varianten denkbar.

Das erste Gleitelement kann gegenüber der Platte drehbeweglich sein. Das Gleitelement kann aber auch an der Platte befestigt sein, beispielsweise mit einer Schraub-, Klebeoder Steckverbindung.

Das erste Gleitelement kann ein Loch aufweisen, durch welches ein Befestigungsmittel für den Zapfen dringt, wobei das Befestigungsmittel den Zapfen an der unter dem Gleitelement liegenden Platte befestigt. In dieser Variante grenzt das erste Gleitelement direkt das Befestigungsmittel an. Das Befestigungsmittel kann eine Schraube sein, welche den Zapfen und das erste Gleitelement durchdringt und in die Platte geschraubt wird.

Der Aufbau kann auch derart sein, dass die Platte einen Vorsprung nach oben aufweist, an welchem der Zapfen mit einem Befestigungsmittel befestigt wird. Der Vorsprung kann ein Loch mit einem Innengewinde für eine Schraube aufweisen. Das erste Gleitelement kann eine komplementär zur Form des Vorsprungs geformte Öffnung aufweisen. Das Gleitelement umfasst dann den Vorsprung, wobei die Gleitfläche des Gleitelements und die Oberfläche des Vorsprungs vorzugsweise bündig oder im Wesentlichen bündig zueinander sind. Auf dem Vorsprung ist der Zapfen befestigt, vorzugsweise festgeschraubt. Vorzugsweise ist der Zapfen so bemessen, dass er einen größeren Durchmesser in horizontaler Richtung aufweist als der Vorsprung und somit teilweise auch auf dem Gleitelement aufliegt und dieses je nach Dicke des Gleitelements gegen die Platte presst.

Der Zapfen kann aus verschiedenen Materialien gefertigt sein, beispielsweise Metall oder Kunststoff, z.B. Polyamid, wobei ein Kunststoff, der eine hohe Festigkeit und Steifigkeit und gleichzeitig einen geringen Reibungskoeffizienten gegenüber Stahl und Kunststoff aufweist, bevorzugt ist. Die Wandung des Loches in der Drehscheibe, in das der Zapfen eingreift, ist vorzugsweise ebenfalls aus einem Kunststoff mit geringem Reibungskoeffizienten gegenüber dem Material des Zapfens gefertigt, sodass die Drehscheibe möglichst leicht um den Zapfen beweglich ist. Beispielsweise kann in einer Drehscheibe aus Metall ein Körper eingelassen sein, der ein Langloch aufweist und der mit der Drehscheibe fest verbunden ist. Ein bevorzugtes Beispiel hierfür ist ein in eine Drehscheibe eingelassener Ring, vorzugsweise aus einem Kunststoff, z.B. Polyamid. Das Loch in der Drehscheibe und der darin eingreifende Zapfen sind vorzugsweise mit einem Deckel verschlossen, der an der Oberfläche der Drehscheibe befestigt oder aufgelegt ist.

Zur Demontage der Drehscheibe wird, sofern vorhanden, der Deckel gelöst, anschließend wird der Zapfen vom Lager gelöst, beispielsweise durch Lösen einer Schraubverbindung. Danach, oder schon vorher, wird die Verbindung zwischen Drehscheibe und Brückenplatte gelöst, insbesondere eine Steckverbindung, und die Brückenplatte kann angehoben oder ausgebaut werden. Nach diesen Schritten kann die Drehscheibe auf der ersten Gleitfläche des Lagers verschoben werden. Die Drehscheibe wird dann aus der Führung gezogen, vorzugsweise in Richtung des zweiten Fahrzeugteils verschoben, wobei der in der Führung am ersten Fahrzeugteil geführte erste Rand der Drehscheibe aus der Führung herausgezogen wird, beispielsweise aus Gleitelementen der Führung. Bei dieser Verschiebebewegung der Drehscheibe wird der zuvor gelöste Zapfen entweder mit verschoben oder er kann entnommen werden. Nach dem Verschieben und Herausziehen aus der Führung liegt die Drehscheibe frei und kann entfernt werden. Nach Entnahme der Drehscheibe liegt die Gleitfläche des Lagers, auf welcher die Scheibe zuvor gelegen hat, frei und nach Entfernung des Lagers und einer eventuell vorhandenen Abdeckung des Gelenks zwischen den Fahrzeugteilen, z. B. eines Gelenkpfannendeckels, ist das Gelenk zur Ausführung von Wartungsarbeiten zugänglich. Die zuvor beschriebenen Demontageschritte können, sofern sinnvoll und möglich, auch in einer anderen Reihenfolge ausgeführt werden.

Eine besonders vorteilhafte Ausführungsform der Erfindung betrifft eine Schienenfahrzeugbrücke, die besonders für gelenkig miteinander verbundene Fahrzeugteile geeignet ist, die während der Fahrt Nickbewegungen vollziehen, wenn das Fahrzeug über eine Kuppe oder durch eine Senke fährt. In dieser Ausführungsform einer Schienenfahrzeugbrücke ist die Drehscheibe im montierten Zustand auf der ersten Gleitfläche des Lagers drehbar gelagert, und die Drehscheibe ist zudem auf der ersten Gleitfläche des Lagers verschiebbar gelagert, um eine Nickbewegung des ersten und des zweiten Fahrzeugteils relativ zueinander zu ermöglichen. Die Drehscheibe kann somit eine Drehbewegung und eine Translationsbewegung gleichzeitig, einander überlagert, ausführen. Im montierten Zustand ist der erste Rand der Drehscheibe in der Führung, die am ersten Fahrzeugteil angeordnet ist, drehbar geführt, der zweite Rand der Drehscheibe ist mit der mindestens einen Brückenplatte verbunden, insbesondere über eine Steckverbindung, und das Führungselement, beispielsweise ein Zapfen, ist nicht gelöst. Dies entspricht dem Zustand, der während des Fahrbetriebes des Schienenfahrzeugs vorliegt.

Bei dieser Ausführungsform kann sich die Drehscheibe im Fahrbetrieb auf der ersten Gleitfläche des Lagers so verschieben, dass der erste Rand der Drehscheibe weiter in die Führung, in welcher der erste Rand der Drehscheibe geführt ist, hinein bewegt wird. Ebenso kann sich die Drehscheibe im Fahrbetrieb auf der ersten Gleitfläche des Lagers verschieben, sodass der erste Rand der Drehscheibe etwas von der Führung, in welcher der erste Rand der Drehscheibe geführt ist, weg bewegt wird, ohne dass dabei der erste Rand die Führung verlässt.

Anders ausgedrückt ist eine Bewegung der Drehscheibe zum ersten Fahrzeugteil hin oder vom ersten Fahrzeugteil weg ermöglicht. Bei dieser Ausführungsform kann die Schienenfahrzeugbrücke besonders gut Bewegungen der Fahrzeugteile zueinander nachvollziehen, die auftreten wenn das Fahrzeug über eine Kuppe oder durch eine Senke fährt (Nickbewegung).

Je nach verwendeter Gelenkverbindung liegt der Drehpunkt (bzw. die Drehachse) der Drehscheibe bei einer Fahrt über eine Kuppe oder durch eine Senke nicht über dem Drehpunkt des Gelenks. D.h. die Drehachse der Drehschiebe ist an anderer Position als die Drehachse des Gelenks. Die Drehscheibe befindet sich beispielsweise oberhalb eines Gelenklagers und der Drehpunkt der Drehscheibe liegt nicht über dem Gelenkpunkt. In diesem Fall ist die Schienenfahrzeugbrücke so gestaltet, dass die Drehscheibe in Längsrichtung, zum ersten Fahrzeugteil hin oder vom ersten Fahrzeugteil weg, verschiebbar ist.

Wenn sich bei einer Fahrt über eine Kuppe oder durch eine Senke die Drehscheibe vom ersten Fahrzeugteil etwas weg bewegen kann, wird der erste Rand der Drehscheibe von der am ersten Fahrzeugteil angeordneten Führung etwas weg bewegt, ohne dass er die Führung verlässt. Wenn der erste Rand aus der Führung etwas weg bewegt ist, ist je nach Spielraum des Randes in der Führung eine größere Winkelbewegung nach oben (Senke) oder nach unten (Kuppe) der Drehscheibe relativ zu einer benachbarten Bodenplatte des ersten Fahrzeugteils ermöglicht. Dieses Prinzip ist besonders gut anwendbar, wenn der Rand der Bodenplatte in einer C-förmigen Führung geführt ist. Hierbei ändert sich die Länge der Brückenplatte(n) nicht, aber der Abstand der Bodenplatten des ersten und zweiten Fahrzeugs.

Die Verschiebung der Drehscheibe in Richtung des ersten Fahrzeugs oder in Gegenrichtung wird bei dieser Ausführungsform von dem Führungselement, beispielsweise einem Zapfen, begrenzt. Die Drehscheibe nur so weit verschiebbar, dass sie im montieren Zustand der Schienenfahrzeugbrücke nicht mit ihrem ersten Rand aus ihrer am ersten Fahrzeugteil angeordneten Führung rutscht. Das Führungselement bildet einen Anschlag für die erläuterte Verschiebung (Translation) der Drehscheibe auf der ersten Gleitfläche, wobei der Anschlag die Verschiebung begrenzt.

Vorzugsweise ist das Führungselement ein Zapfen, wie bereits zuvor erläutert, und zwischen dem Zapfen und einem in der Drehscheibe befindlichen Loch, in das der Zapfen eingreift, ist ein Spalt vorgesehen, so dass der Zapfen mit Spiel in dem Loch gelagert ist. Dadurch ist im Fahrbetrieb eine Verschiebung der Drehscheibe auf der ersten Gleitfläche des Lagers ermöglicht. Die Drehscheibe ist somit im eingebauten Zustand um den Zapfen auf der ersten Gleitfläche des Lagers drehbar und auch gegen den Zapfen verschiebbar.

In einer besonders vorteilhaften Variante der zuvor beschriebenen Ausführungsform ist das Loch in der Drehscheibe, in das der Zapfen des Lagers eingreift, ein in Längsrichtung des zweiten Fahrzeugteils ausgerichtetes Langloch, dessen Breite dem Durchmesser des Zapfens entspricht. Das Langloch, erlaubt im Wesentlichen nur eine Verschiebung der Drehscheibe auf der ersten Gleitfläche des Lagers in Längsrichtung des Fahrzeugs (Längsrichtung bezogen auf nicht zueinander verdrehte Fahrzeugteile).

Die Erfindung betrifft in einem weiteren Aspekt eine Schienenfahrzeugbrücke wie zuvor beschrieben, bei der die Drehscheibe im montierten Zustand auf der ersten Gleitfläche des Lagers drehbar gelagert ist und im montierten Zustand der Drehscheibe das Lager zusammen mit der Drehscheibe verschiebbar oder verschwenkbar ist, um eine Nickbewegung des ersten und des zweiten Fahrzeugteils relativ zueinander zu ermöglichen. "Verschwenkbar" bedeutet insbesondere eine Verschiebbarkeit des Lagers auf einer kreisbogenförmigen Strecke. In dieser Ausführungsform ist das erste Lager gegen das erste Fahrzeugteil, beispielsweise gegen einen Gelenkträger, verschiebbar oder verschwenkbar.

Bei dieser Ausführungsform ist die Drehscheibe im montierten Zustand vorzugsweise nicht auf der ersten Gleitfläche des Lagers verschiebbar gelagert. Das Lager kann zusammen mit der darauf gelagerten Drehscheibe verschoben oder verschwenkt werden, ohne dass die Drehscheibe relativ zum Lager verschoben wird. Entsprechend ist ein in der Drehscheibe vorhandenes Loch für einen Zapfen bei dieser Ausführungsform vorzugsweise auch kein Langloch. Es ist aber auch eine Kombination denkbar aus Bewegung des Lagers relativ zum ersten Fahrzeugteil und Verschiebbarkeit der Drehscheibe auf dem Lager.

In einer Variante der zuvor genannten Ausführungsform weist das Lager einen Zapfen auf und die Drehscheibe weist ein Loch auf, in das der Zapfen eingreift, wie bereits oben beschrieben, und weiterhin weist die Schienenfahrzeugbrücke folgende Merkmale auf:
- das Lager weist eine zweite Gleitfläche auf, die vorzugsweise zur ersten Gleitfläche parallel ist, und mit der es auf einer Oberfläche einer unter dem Lager angeordneten, horizontal verlaufenden Platte gleitend aufliegt und
- das Lager ist um eine seitlich zur Mittelachse des Zapfens angeordnete vertikale Achse kreisbogenförmig in Richtung des ersten Fahrzeugteils und in Richtung des zweiten Fahrzeugteils horizontal schwenkbar angeordnet.

Die genannte vertikalen Achse und die Mittelachse des Zapfens sind zueinander parallel. "Seitlich" bedeutet insbesondere in Richtung einer Fahrzeugseitenwand, ausgehend von der Mittelachse des Zapfens.

Durch die Schwenkbarkeit oder Verschiebbarkeit des Lagers wird eine Translationsfreiheit der Drehscheibe erzielt, wodurch die Drehscheibe Bewegungen bei einer Fahrt durch eine Senke oder über eine Kuppe aufnehmen kann. Im Unterschied zur zuvor beschriebenen Ausführungsform mit einem Langloch ist (im eingebauten Zustand, Fahrbetrieb) vorzugsweise nicht die Drehscheibe gegenüber dem Lager und dem Zapfen auf der ersten Gleitfläche des Lagers verschiebbar, sondern die Drehscheibe und das Lager können gemeinsam verschoben oder verschwenkt werden. In dieser Variante weist die Drehscheibe vorzugsweise ein Loch auf, in das der Zapfen eingreift, ohne dass er in dem Loch verschiebbar ist, was durch ein zum Zapfen komplementäres Loch erreicht werden kann. Die Drehscheibe kann dann um den Zapfen rotieren, ist aber nicht gegen den Zapfen verschiebbar. Optional kann der Zapfen an seiner Außenseite auch ein dort angebrachtes weiteres Lager aufweisen, um eine leichtere Verdrehbarkeit der Drehscheibe gegenüber dem Zapfen zu ermöglichen. Besonders bevorzugt ist ein Gelenklager nach der deutschen Industrienorm DIN648. Bei Demontage der Drehscheibe muss der Zapfen je nach Ausführungsform nicht aus der Drehscheibe entnommen werden. Er kann auch in der Drehscheibe verbleiben, mitsamt einem eventuell vorhandenen Lager an seiner Außenseite.

Das Lager, auf dem die Drehscheibe drehbar gelagert ist, und das seinerseits gegen das erste Fahrzeugteil schwenkbar oder verschiebbar ist, weist in der zuvor beschriebenen Ausführungsform beispielsweise die folgenden Komponenten auf:
- eine Platte, die eine Einrichtung zur Befestigung eines Zapfens aufweist,
- ein über der Platte angeordnetes erstes Gleitelement, das die erste Gleitfläche des Lagers aufweist,
- einen Zapfen, der an der Platte fixierbar ist und im fixierten Zustand über dem ersten Gleitelement angeordnet ist.
- ein unter der Platte angeordnetes zweites Gleitelement mit einer zweiten Gleitfläche zur gleitenden Auflage auf einer unter dem Lager angeordneten, horizontal verlaufenden Platte.

Die Fixierung des Zapfens kann mit einem Befestigungsmittel erfolgen, vorzugsweise mit einer Schraube. Die Einrichtung zur Befestigung eines Zapfens in der Platte kann eine Einrichtung zur Aufnahme eines Befestigungsmittels für den Zapfen sein, beispielsweise ein Gewinde zum Anschrauben eines Zapfens, das in der Platte vorgesehen ist.

Die Erfindung stellt auch eine Schienenfahrzeugbrücke mit einer speziell gestalteten Führung für eine Drehscheibe zur Verfügung.

Schienenfahrzeugbrücken wurden eingangs erläutert. Im Stand der Technik sind Gleitelemente als Bestandteil einer am ersten Fahrzeugteil angeordneten Drehscheiben-Führung beispielsweise am Untergestell (Chassis) des betreffenden Fahrzeugteils (beispielsweise eines Wagens) befestigt, beispielsweise an Trägern des Untergestells. Das Untergestell des Fahrzeugteils ist nicht derart beschaffen, dass die Gleitelemente bei Befestigung an dem Untergestell auf einfache Weise in einer Ebene anzuordnen sind. Dies ist aber zur Führung der Drehscheibe wünschenswert. Bei einer bisherigen Lösung werden zur Erreichung dieses Ziels Befestigungsstellen für Gleitelemente am Untergestell entsprechend bearbeitet oder es werden Unterlege-, Beilage- oder Ausgleichsplatten zur korrekten Ausrichtung der Gleitelemente verwendet.

Der vorliegenden Erfindung lag auch die Aufgabe zugrunde, auf alternative und möglichst einfache Weise eine Anordnung von Gleitelementen für die Führung einer Drehscheibe in einer Ebene zu ermöglichen.

Diese Aufgabe wird gelöst durch eine Schienenfahrzeugbrücke zur Überbrückung eines Übergangs zwischen einem ersten Fahrzeugteil und einem zweiten Fahrzeugteil, die durch ein Gelenk miteinander verbunden sind, wobei die Schienenfahrzeugbrücke
- eine Drehscheibe, mit einem ersten Rand und einem zweiten Rand,
- eine Führung, die am ersten Fahrzeugteil angeordnet ist, und in welcher der erste Rand der Drehscheibe drehbar zum ersten Fahrzeugteil geführt ist,
aufweist,
wobei die Führung mehrere in einer Ebene angeordnete Gleitelemente, nachfolgend auch bezeichnet als "dritte Gleitelemente", aufweist, wobei jedes dritte Gleitelement an einer Befestigungsplatte befestigt ist, die mit der Bodenplatte verbunden ist.

Diese Schienenfahrzeugbrücke ist ein eigenständiger Gegenstand und weist nicht zwingend die sonst noch genannten Merkmale der vorangehend beschriebenen Ausführungsformen oder des Patentanspruchs 1 oder 2 auf. Die Merkmale dieser Schienenfahrzeugbrücke und die Merkmale einer nachfolgend erläuterten Führung können aber auch mit allen zuvor genannten Schienenfahrzeugbrücken und deren Merkmalen kombiniert werden.

Eine Ausrichtung der Gleitelemente in einer gemeinsamen Ebene wird in der vorliegenden Erfindung erreicht, indem man die Gleitelemente jeweils an einer Befestigungsplatte befestigt, die wiederum mit der zur Drehscheibe benachbarten Bodenplatte verbunden ist. Es ist bei dieser Lösung nicht notwendig, das Untergestell zu bearbeiten und ebenso sind Unterlegeplatten oder andere Ausgleichselemente entbehrlich. Die Gleitelemente werden mittels der Befestigungsplatten an der Bodenplatte des ersten Fahrzeugteils ausgerichtet.

Die Befestigungsplatte ist ein Verbindungselement, mit dem ein drittes Gleitelement indirekt an der Bodenplatte des ersten Fahrzeugteils befestigt ist. Beispielsweise kann die Befestigungsplatte so an der Unterseite der Bodenplatte angebracht sein (beispielsweise durch eine Klebe- oder Schraubverbindung), dass ein Teil der Befestigungsplatte horizontal über den Rand der Bodenplatte, an dem die Führung für die Drehscheibe angeordnet werden soll, hervorsteht. Auf der Oberseite des hervorstehenden Teils der Befestigungsplatte kann das dritte Gleitelement befestigt sein, beispielsweise durch eine Klebe- oder Schraubverbindung. Andere Anordnungen sind denkbar. Beispielsweise kann in einer anderen Ausführungsform die Befestigungsplatte so an der Oberseite der Bodenplatte angebracht sein (beispielsweise durch eine Klebe- oder Schraubverbindung), dass ein Teil der Befestigungsplatte horizontal über den Rand der Bodenplatte, an dem die Führung für die Drehscheibe angeordnet werden soll, hervorsteht. Auf der Unterseite des hervorstehenden Teils der Befestigungsplatte kann das dritte Gleitelement befestigt sein.

Alle dritten Gleitelemente sind auf die gleiche Art und Weise an der Bodenplatte befestigt. Die Bodenplatte weist auf ihrer Unterseite und/oder ihrer Oberseite eine ebene Oberfläche auf. Daher sind durch Befestigung der Gleitelemente an der Bodenplatte mittels einer Befestigungsplatte, wie oben beschrieben, die dritten Gleitelemente in einer Ebene angeordnet.

Alle dritten Verbindungselemente können auch an einer gemeinsamen Befestigungsplatte befestigt sein.

Die Befestigungsplatte für ein drittes Gleitelement kann direkt an der Bodenplatte befestigt sein. Zwischen der Befestigungsplatte und der Bodenplatte können aber auch weitere Bauelemente, beispielsweise Verbindungselemente, angeordnet sein. Besonders bevorzugt ist die Befestigungsplatte an der Unterseite der Bodenplatte befestigt.

Die Bodenplatte kann mitsamt den an ihr befestigten Befestigungsplatten und den an den Befestigungsplatten befestigten dritten Gleitelementen am Untergestell des Fahrzeuges fixiert werden, vorzugsweise durch Verkleben.

Vorzugsweise haben die dritten Gleitelemente die Form einer Platte. Sie sind beispielsweise ausgeführt, wie beschrieben in EP 1854691, Fig. 5 und Fig. 6.

In einer speziellen Ausführungsform ist weist die Befestigungsplatte ein oder mehrere Löcher mit Innengewinde als Befestigungsstellen für ein drittes Gleitelement auf. So können die dritten Gleitelemente jeweils durch eine Schraubverbindung an einer zugehörigen Befestigungsplatte befestigt werden.

In einer weiteren Ausführungsform weist die Führung auch noch vierte Gleitelemente auf, die von den dritten Gleitelementen vertikal beabstandet angeordnet sind, so dass zwischen einem dritten Gleitelement und einem vierten Gleitelement ein Zwischenraum gebildet ist in dem der ersten Rand der Drehscheibe geführt ist. Die Gleitelemente sind zur Oberseite und zur Unterseite des ersten Randes benachbart und der erste Rand wird an seiner Oberseite und seiner Unterseite (beidseitig) von den Gleitelementen geführt. In dieser Ausführungsform umgreifen somit die dritten Gleitelemente und die vierten Gleitelemente den Rand der Drehscheibe von oben und von unten. Ein drittes und ein viertes Gleitelement können als zueinander parallel angeordnete Platten gestaltet sein. Hierbei können das dritte und das vierte Gleitelement gleich gestaltet sein. Zwischen dem dritten und dem vierten Gleitelement ist vorzugsweise ein Abstandhalter vorgesehen, so dass im Querschnitt die Gleitelemente und der Abstandhalter eine C-Form aufweisen, wobei die Gleitelemente den oberen und den unteren Schenkel des C bilden.

Vorzugsweise bestehen das dritte und das vierte Gleitelement aus einem Kunststoff mit einem geringen Reibungskoeffizienten gegenüber Stahl, beispielsweise Polyamid.

In einer speziellen Ausführungsform sind die dritten und, sofern vorgesehen, vierten Gleitelemente der Führung kreisbogenförmig an einem kreisbogenförmigen Rand der Bodenplatte angeordnet, um einen kreisbogenförmigen Rand der Drehscheibe zu führen. Die Gleitelemente sind noch mehr bevorzugt entlang eines Kreisbogens von 60° bis 140°, noch mehr bevorzugt 60°- 120°, symmetrisch zur Fahrzeuglängsachse angeordnet. Diese Ausführungsform hat den Vorteil, dass bei der Demontage der Drehscheibe die Drehschreibe nur um eine relativ kurze Strecke horizontal verschoben werden muss, d. h. aus dem ersten Lager herausgezogen werden muss, um sie nach oben entnehmen zu können. Gleitelemente können einem Kreisbogen (bzw. diesem Winkelausschnitt) ununterbrochen aneinander angrenzend angeordnet sein, oder es können Gleitelemente nur in Teilen des Kreisbogens angeordnet sein.

Schließlich betrifft die Erfindung in einem weiteren Aspekt ein Schienenfahrzeug, das die zuvor beschriebenen Schienenfahrzeugbrücken aufweist, insbesondere einen Personenzug oder eine Straßenbahn.

Nachfolgend wird die Erfindung anhand spezieller Ausführungsformen beschrieben. Es zeigen:
- Fig. 1: eine Ansicht einer erfindungsgemäßen Schienenfahrzeugbrücke von schräg oben,
- Fig. 2: die Lagerung der Drehschreibe auf einem Lager oberhalb des Drehgelenks in einer Ansicht von schräg oben,
- Fig. 3: ein Schnitt durch die Anordnung von Fig. 2 entlang der Linie x-x,
- Fig. 4: eine Steckverbindung zwischen einer Drehscheibe und Brückenplatten in einer Detailansicht
- Fig. 4a: eine Steckverbindung zwischen zwei Brückenplatten in einer Detailansicht,
- Fig. 5: den Ausschnitt einer Drehscheibe, die ein Langloch aufweist und auf einem Lager mit einem Zapfen gelagert ist,
- Fig. 6: den Ausschnitt einer Drehscheibe, die auf einem Lager aufliegt, welches eine zweite Gleitfläche aufweist und über dem Drehgelenk gleitend aufliegt, in einer Schnittansicht vertikal zur Fahrzeuglängsachse,
- Fig. 7: eine Detailansicht eines Lagers mit einer zweiten Gleitfläche, mit der es auf einer Oberfläche einer unter dem Lager angeordneten, horizontal verlaufenden Platte gleitend aufliegt, in einer Ansicht von schräg oben,
- Fig. 8: die Lagerung einer erfindungsgemäßen Drehscheibe an ihrem ersten Rand in einer Führung am ersten Fahrzeugteil, in einem Längsschnitt,
- Fig. 9: einen Teil einer Schienenfahrzeugbrücke von schräg oben mit offen liegender Führung und in der Führung geführter Drehscheibe,
- Fig. 10: einen Teil einer Schienenfahrzeugbrücke von schräg oben mit demontierter Drehscheibe und offen liegender Führung am ersten Fahrzeugteil,
- Fig. 11: einen Teil einer weiteren Schienenfahrzeugbrücke von schräg oben mit demontierter Drehscheibe und offen liegender Führung am ersten Fahrzeugteil.

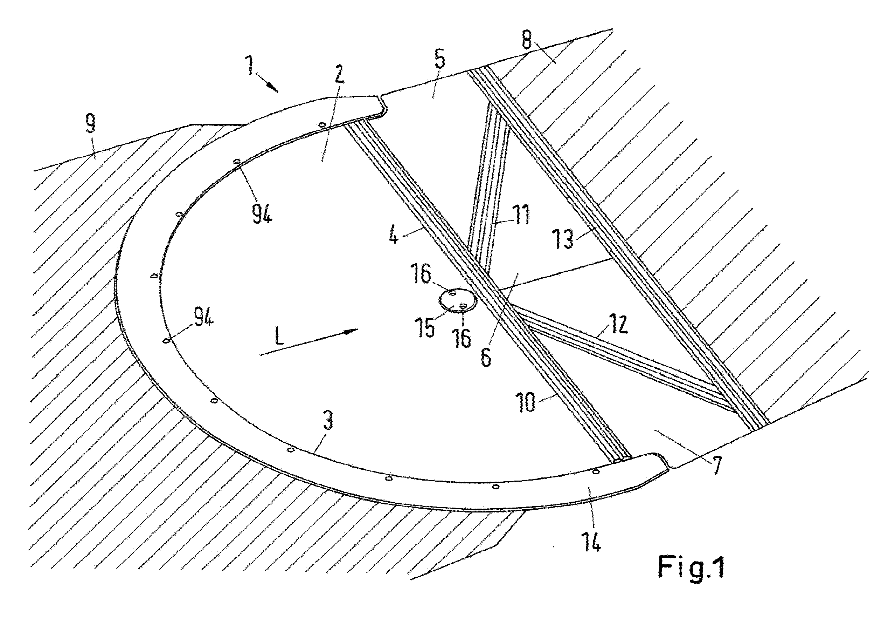

Fig. 1 zeigt eine Schienenfahrzeugbrücke 1 mit einer Bodenplatte 9 eines ersten Fahrzeugteils, einer Drehscheibe 2, Brückenplatten 5, 6, 7 und einer Bodenplatte 8 eines zweiten Fahrzeugteils. Die Drehscheibe 2 ist mit ihrem ersten, kreisbogenförmigen Rand 3, der unter einer Abdeckleiste 14 verdeckt ist, in einer Führung (hier nicht gezeigt) drehbar zur Bodenplatte 9 des ersten Fahrzeugteils geführt. Die Führung ist ebenfalls von der Abdeckleiste 14 überdeckt. Mit ihrem zweiten Rand 4 ist die Drehscheibe 2 mit den Brückenplatten 5, 6, 7 über ein Verbindungselement 10 durch eine Steckverbindung verbunden. Die Brückenplatten 5, 6, 7 sind miteinander durch Verbindungselemente 11, 12 steckbar verbunden und sie sind mit der Bodenplatte 8 des zweiten Fahrzeugteils mittels eines weiteren Verbindungselements 13 steckbar verbunden. Die gezeigte Anordnung aus drei, im Wesentlichen dreieckigen Bodenelementen 5, 6, 7 ermöglicht eine gute Anpassung der Schienenfahrzeugbrücke an Nickbewegungen, die auftreten, wenn ein Fahrzeug über eine Kuppe oder durch eine Senke fährt und an Wankbewegungen oder Torsionsbewegungen, die beispielsweise auftreten, wenn die beiden Fahrzeugteile gegeneinander verdreht werden. Die Drehscheibe 2 weist ein Loch (nicht gezeigt) auf, das sich an der Stelle ihrer Drehachse befindet und mit einer Abdeckplatte 15, die mit Schrauben 16 befestigt ist, verdeckt ist.

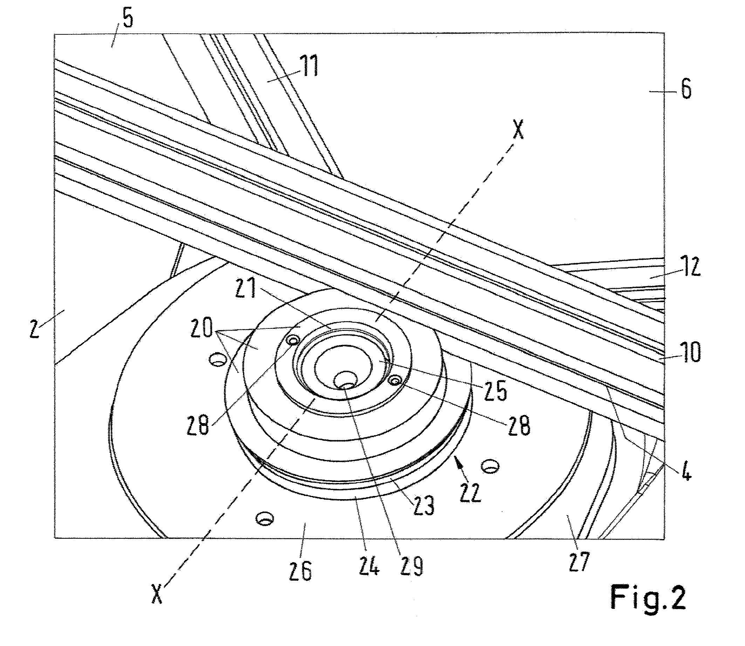

In der Detailansicht der Fig. 2 ist die Drehscheibe 2 transparent dargestellt, sodass man darunter liegende Teile erkennen kann, und die Abdeckung 15 ist entnommen, wodurch das Loch 21 in der Drehscheibe sichtbar ist. Das Loch 21 ist ein Langloch, was in dieser Abbildung nicht sichtbar ist, da oberste Teil des Ringes 20 das Loch teilweise verdeckt. Das Loch 21 wird einem abgestuften Ring 20, der mit der Drehscheibe 2 fest verbunden ist, umrandet. In dem Ring 20 sind Löcher 28 mit Innengewinde zur Befestigung des Deckels 15 vorgesehen. Unterhalb der Drehscheibe 2 befindet sich das Lager 22, auf dem die Drehscheibe 2 mit dem Ring 20 aufliegt. Das Lager 22 ist aus einem ersten Gleitelement 23 und einer Distanzplatte 24 gebildet und es ist mit der Distanzplatte 24 am Gelenkpfannendeckel 26 befestigt. Der Gelenkpfannendeckel liegt auf einer Gelenkpfanne 27 des Gelenks auf und verdeckt das Gelenk. Die Gelenkpfanne 27 ist Teil des ersten Fahrzeugteils. Der Ring 20 der Drehscheibe 2 ist gegenüber dem ersten Gleitelement 23 des Lagers 22 und gegenüber dem Zapfen 25 verdrehbar und verschiebbar. Die erste Gleitfläche des Lagers 22 befindet sich auf dem Gleitelement 23 und der Ring 20 liegt auf dieser Gleitfläche auf. Das erste Gleitelement 23 kann gegenüber der Distanzplatte 24 verdrehbar sein oder an der Distanzplatte 24 befestigt sein. Der Zapfen 25 weist ein zentrales Loch 29 auf und wird mit einer Schraube (nicht gezeigt) an der Distanzplatte 24 befestigt.

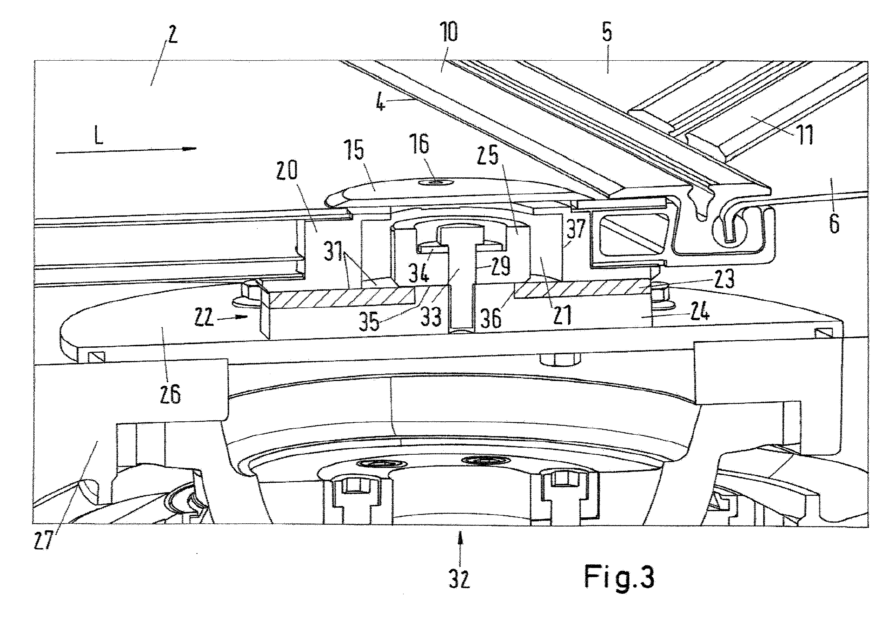

Die Fig. 3 zeigt einen Schnitt durch den Aufbau der Fig. 2 entlang der Achse x-x. Zur Erläuterung von Elementen, die mit identischen Bezugszeichen bezeichnet sind, wird auch auf die Erläuterung der Fig. 2 verwiesen. Des Weiteren zeigt die Fig. 3 das unter dem Lager 22 und dem Gelenkpfannendeckel 26 befindliche Drehgelenk 32. Der Zapfen 25 ist mit einer Schraube 33 und einer Unterlegscheibe 34 an der Distanzplatte 24 befestigt. Die Schraube 33 durchstößt das Loch 29 und ist in die Distanzplatte 24 eingeschraubt. Die Distanzplatte 24 weist im Bereich des Gewindes für die Schraube 33 einen Vorsprung 35 mit einer planen Oberfläche auf, auf welcher der Zapfen 25 aufliegt. Das erste Gleitelement 23 hat eine Ringform mit einem zentralen Loch mit dem Lochrand 36. Das erste Gleitelement 23 ist auf die Distanzplatte 24 aufgelegt und der Lochrand 36 umgibt den Vorsprung 35 passgenau. Ferner liegen die Gleitfläche 31 des ersten Gleitelements 23 und die Oberfläche des Vorsprungs 35 bündig zueinander und bilden eine gemeinsame Ebene. Die Gleitfläche 31 auf dem ersten Gleitelement 23 umgibt den Zapfen 25. Der Ring 20, der mit der Drehscheibe 2 fest verbunden ist, liegt bündig auf der Gleitfläche 31 auf. Der Durchmesser des Zapfens 25 ist so ausgeführt, dass der Zapfen den Vorsprung 35 der Platte 24 in horizontaler Richtung überragt, wodurch der Zapfen 25 auch auf dem ersten Gleitelement 23 aufliegt und dieses auf der Platte 24 fixiert. Die Fixierung ist zumindest derart, dass das erste Gleitelement 23 sich nicht von der Platte 24 abheben kann. Es ist aber durchaus möglich, je nach Dicke des Gleitelements 23, dass das Gleitelement 23 gegenüber der Platte 24 verdrehbar ist. Ebenso kann das erste Gleitelement 23 auch an der Platte 24 fixiert sein, beispielsweise durch eine Schraub-, Klebe- oder Steckverbindung, sodass das Gleitelement 23 und die Platte 24 nicht gegeneinander beweglich sind.

Zwischen dem Rand 37 des Loches 21 in Drehscheibe 2 und dem Zapfen 25 ist in der gezeigten Ausführungsform ein Zwischenraum vorgesehen, weil das Loch ein Langloch ist, sodass die Drehscheibe je nach Ausgangslage um bis zu 2 Spaltbreiten gegenüber dem Zapfen 25 auf der Gleitfläche 31 verschiebbar ist. Diese Verschiebbarkeit dient insbesondere dazu, Bewegungen des ersten und zweiten Fahrzeugteils gegeneinander beim Durchfahren einer Senke oder Überfahren einer Kuppe auszugleichen.

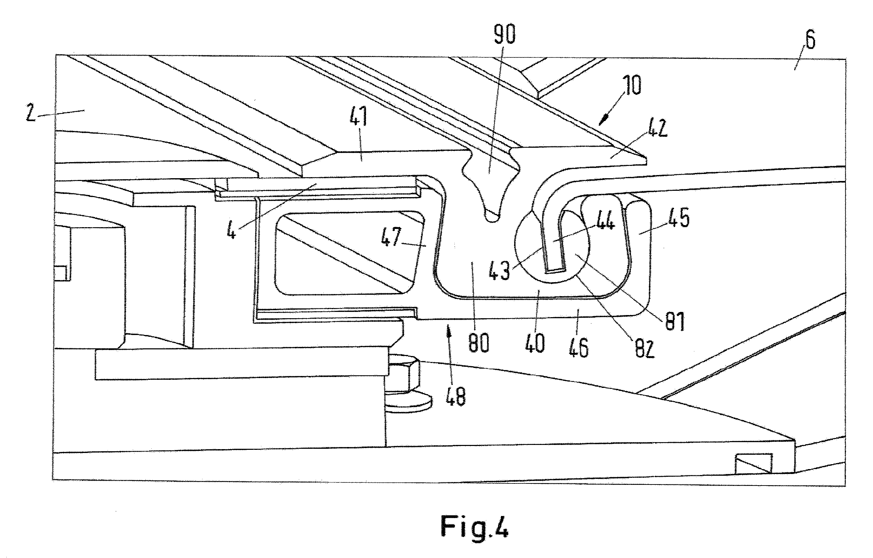

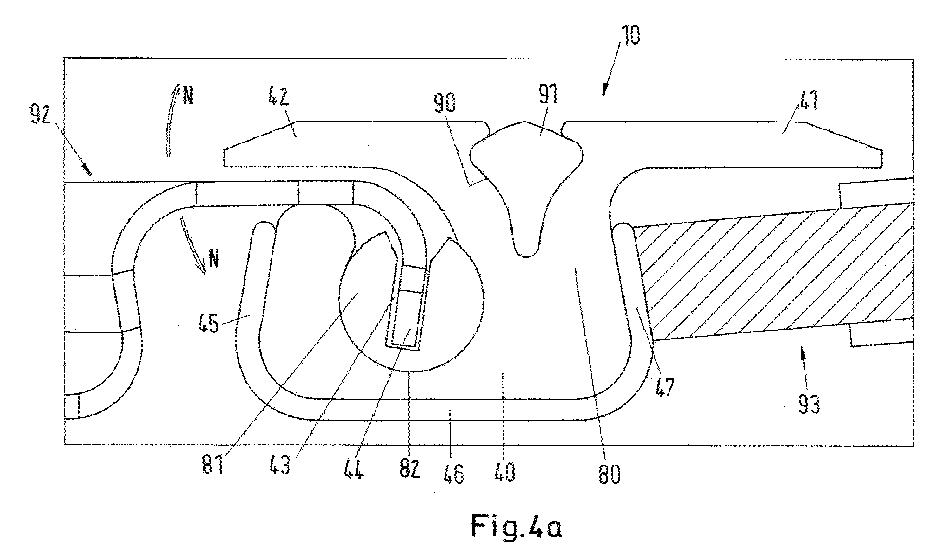

Schließlich zeigt die Fig. 3 auch einen Schnitt durch das Verbindungselement 10 und die Steckverbindung zwischen der Drehscheibe 2 und der Brückenplatte 6. Die Struktur des Verbindungselements 10 und der Steckverbindung sind in der Fig. 4 näher erläutert.

Zur Demontage der Drehscheibe 2 wird der Deckel 15 abgenommen, und die Schraube 33 gelöst und entnommen. Danach ist der Zapfen 25 gegenüber dem Lager 22 verschiebbar oder er kann auch entnommen werden. Außerdem wird die Steckverbindung zwischen der Drehscheibe 2 und den Brückenplatten 5, 6 und 7 (7 hier nicht gezeigt, siehe aber Fig. 1) gelöst (detaillierte Beschreibung anhand Fig. 4). Die Brückenplatten 5, 6, 7 werden entweder angehoben oder vorzugsweise nach Lösen weiterer Verbindungselemente 11, 12, 13 (siehe Fig. 1) entnommen. Anschließend wird die Drehscheibe 2 in Längsrichtung, markiert durch den Pfeil L, auf der ersten Gleitfläche 31 des Lagers 22 verschoben. Dabei wird der erste Rand 3 der Drehscheibe 2 aus der Führung, (Rand 3 und Führung sind in Fig. 1 von der Abdeckleiste 14 überdeckt), herausgezogen und entnommen. Schließlich kann die Drehscheibe 2 nach oben abgehoben werden. Danach liegen das Lager 22 und der Gelenkpfannendeckel 26 frei. Nach Entfernung dieser Komponenten ist das Gelenk 32 für Wartungsarbeiten zugänglich.

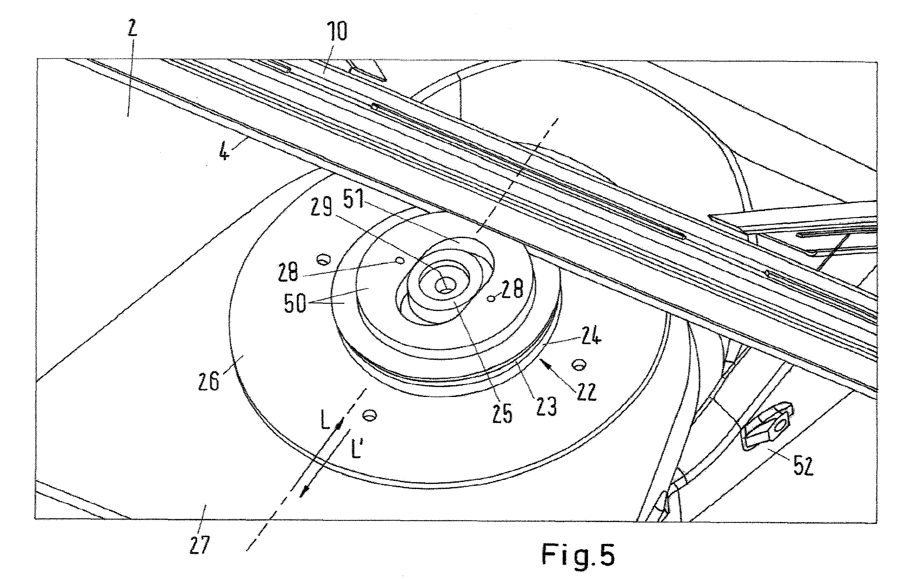

Fig. 4 zeigt einen vergrößerten Ausschnitt aus Fig. 3. Gezeigt ist die Steckverbindung zwischen Drehscheibe 2 und der Brückenplatten 5, 6, 7 (nur 6 gezeigt) mittels eines Verbindungselements 10. Das Verbindungselement 10 hat eine Profilform mit einer Basis 40, einer ersten Lippe 41, einer zweiten Lippe 42 und einer nutförmigen Ausnehmung 43 im Bereich der Basis 40 des Profils. In die nutförmige Ausnehmung 43 ist ein nach unten weisender Schenkel 44 der Brückenplatte 6 (und entsprechende Schenkel der nicht gezeigten Brückenplatten 5, 7) eingesteckt. Der Schenkel 44 liegt an den Wandungen der nutförmigen Ausnehmung 43 an und ist mit Kleber in der Ausnehmung 43 befestigt. Die zweite Lippe 42 deckt den Rand der Brückenplatte 6 (und entsprechende Randbereiche der nicht gezeigten Brückenplatten 5, 7) auf Seiten des nach unten abgeknickten Schenkels 44 ab. Zwischen den Lippen 41, 42 ist eine keilförmige Ausnehmung 90 vorhanden, in die zuvor ein komplementär geformter, keilförmiger Profilstrang 91 eingebracht war. In der Abbildung 5 ist der Profilstrang 91 bereits aus der Ausnehmung durch Herausziehen entfernt. Die Fig. 5a zeigt eine weitere Detaildarstellung eines Verbindungselements, in der ein keilförmiger Profilstrang 91 in die Ausnehmung 90 eingesetzt ist. Fig. 4a ist eine zur Fig. 4 analoge Darstellung eines Verbindungselements 10, wobei Fig. 4a eine Verbindung zwischen beliebigen Brückenplatten 92 und 93 sein kann und nicht ausschließlich auf eine Verbindung zwischen einer Drehscheibe 2 und einer Brückenplatte 6 beschränkt ist. Analoge Elemente sind in Fig. 4 und Fig. 4a mit gleichen Bezugszeichen bezeichnet.

Die Basis 40 des Verbindungselements 10 ist in eine Nut der Drehscheibe 2 eingesteckt. Die Nut der Drehscheibe 2 wird durch die Schenkel 45, 46, 47 gebildet, welche die Basis 40 des Profils umschließen. Die Schenkel 45, 46, 47 sind Teil eines Profilstücks 48, das mit der Drehscheibe 2 fest verbunden ist. Die Lippe 41 deckt den zweiten Rand 4 der Drehscheibe 2 ab. In der gezeigten Ausführungsform ist der Nutgrund der Nut der Drehscheibe breiter als die Nutöffnung, da die Schenkel 45, 46, 47 in einem Winkel von weniger als 90°zueinander stehen. Dies gibt dem Verbindungselement 10 Halt in der Nut der Drehscheibe 2.

Das Verbindungselement 10 besteht aus zwei Teilen 80, 81. Das Teil 81 ist mit dem Schenkel 44 der Brückenplatte 6 (und entsprechenden Schenkeln der Brückenplatten 5 und 7) verklebt. Das Teil 81 besteht aus einem Strang mit kreisbogenförmigem Querschnitt, in den die nutförmige Ausnehmung 43 von oben eingelassen ist. In der hier gezeigten Ausführungsform umgreift das erste Teil 80 das zweite Teil 81, wobei die Öffnung der nutförmigen Ausnehmung 43 zwecks Aufnahme des Schenkels 44 freigelassen ist. Das zweite Teil 81 befindet sich in einer kreisbogenförmigen Ausnehmung 82 im ersten Teil 80. Das Teil 81 ist drehbar im Teil 80 gelagert. Durch die Drehbarkeit sind durch das Verbindungselement 10 miteinander verbundene Brückenplatten 92 und 93 leicht zueinander im Sinner einer Nickbewegung beweglich, was in der Fig. 4a durch die Pfeile N angedeutet ist. Dasselbe gilt, wenn eine Drehscheibe 2 und eine Brückenplatte 6 miteinander verbunden sind, wie in Fig. 4 gezeigt.

Das Verbindungselement ist im Bereich der nutförmigen Ausnehmung 43 aus dem zweiten Teil 81 und in anderen Bereichen, insbesondere der Basis 46 und den Lippen 41, 42, aus dem ersten Teil 80 gebildet. Die Teile 80, 81 können aus unterschiedlichen Materialien gefertigt sein. Beispielsweise kann der erste Teil 80 aus einem elastischen Material bestehen und der zweite Teil 81 aus einem Material bestehen, das eine höhere Steifigkeit aufweist als das Material des ersten Teils. Ebenso kann das Keilprofil 91 aus einem Material bestehen, das eine höhere Steifigkeit aufweist als das Material des ersten Teils 80. Bei einer solchen Materialwahl erlaubt das Verbindungselement relativ große Winkelbewegungen von Drehscheibe und Brückenplatte zueinander, insbesondere zur Vertikalen bei Fahrten eines Fahrzeugs über Kuppen oder durch Senken, und große Wankbewegungen (Torsion über die Längsachse des Fahrzeugs), bei gleichzeitig hoher Stabilität des Verbindungselements und geringem Verschleiß. Zudem ist das Teil 81 drehbar im Teil 80 angeordnet, wodurch relativ große Winkelbewegungen von Drehscheibe und Brückenplatte zueinander ebenfalls ermöglicht werden.

Zum Lösen der Steckverbindung zwischen der Drehscheibe 2 und den Brückenplatten 5, 6, 7, gemäß Fig. 4, wird zunächst das Keilprofil 91 (s. Fig. 4a) aus der Ausnehmung 90 herausgezogen. Dann wird die Lippe 42 nach oben geklappt, was durch die Ausnehmung 90 leicht möglich ist. Danach werden die Brückenplatte 5, 6, 7, bzw. deren Schenkel (44 im Falle von Platte 6) aus dem Verbindungselement herausgezogen. Da der Schenkel 44 mit dem Teil 81 verklebt ist, und das Teil 81 drehbar in dem Teil 80 angeordnet ist - 80 und 81 also nicht fest verbunden sind, wird auch das Teil 81 zusammen mit dem Schenkel aus dem Verbindungselement 10 herausgezogen. Danach sind die Brückenplatten 5, 6, 7 von der Drehscheibe getrennt und können angehoben werden. Entweder wird dann die Drehscheibe schon demontiert oder es werden auch noch weitere Verbindungen 11, 12 zwischen den Brückenplatten und die Verbindung 13 zum Boden 8 des zweiten Fahrzeugteils gelöst (s. Fig. 1), dann die Brückenplatten 5, 6, 7 entnommen und anschließend die Drehscheibe 2 ausgebaut.

Falls erwünscht, zur Demontage der Drehscheibe für Wartungszwecke aber nicht erforderlich, kann die Basis 40 des Verbindungsteils 10 aus der Nut in der Drehscheibe 2, gebildet aus den Schenkeln 45, 46, 47, gezogen werden, beispielsweise durch Anfassen an den Lippen 41, 42 und Ziehen nach oben. Der Wiederzusammenbau der Steckverbindung kann in umgekehrter Reihenfolge erfolgen wie oben beschrieben.

Die Fig. 5 zeigt eine zur Fig. 2 analoge Darstellung, bei der das Loch in der Drehscheibe in einer Längsrichtung L des zweiten Fahrzeugteils ausgerichtetes Langloch 51 ist. Das Langloch 51 ist in einem Ring 50 gebildet, der an der Drehscheibe 2 fixiert ist. Die Längsrichtung des zweiten Fahrzeugteils ist mit dem Pfeil L gekennzeichnet. Durch das Langloch 51 ist die Drehscheibe gegen den Zapfen 25 und die erste Gleitfläche in Längsrichtung L vom ersten Fahrzeugteil weg oder in die entgegengesetzte Richtung L' zum ersten Fahrzeugteil hin verschiebbar. Dadurch können insbesondere Bewegungen der Fahrzeugteile gegeneinander, die beim Durchfahren einer Senke oder Fahren über eine Kuppe auftreten, von der Schienenfahrzeugbrücke besser nachvollzogen werden. Weiterhin ist in Fig. 5 ein Gelenkstützträger 52 gezeigt, der mit dem zweiten Fahrzeugteil verbunden ist.

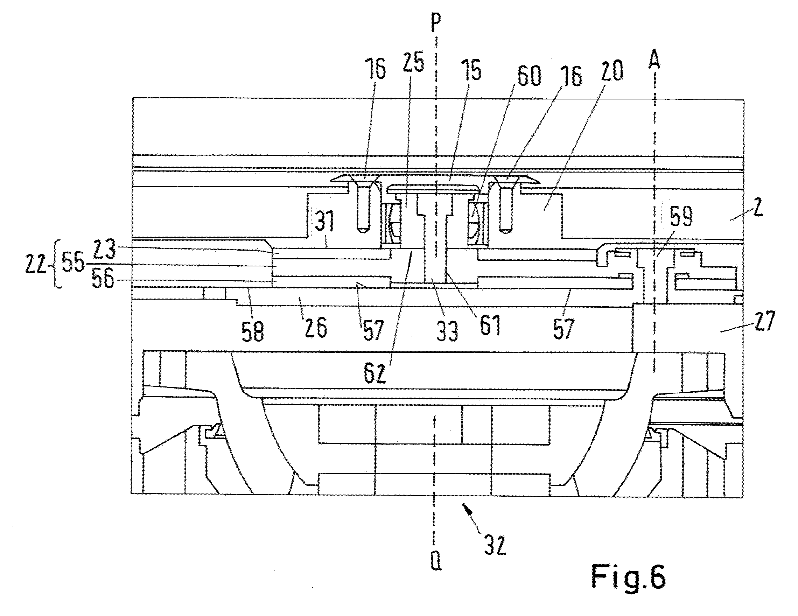

Die Fig. 6 zeigt eine Schienenfahrzeugbrücke, bei der das Lager 22 ein erstes Gleitelement 23 mit einer ersten Gleitfläche 31, eine Platte 55 und ein unter der Platte angeordnetes zweites Gleitelement 56 mit einer zweiten Gleitfläche 57 aufweist. Die zweite Gleitfläche 57 liegt auf der Oberfläche 58 einer horizontal verlaufenden Platte 26, welche in diesem Fall der Gelenkpfannendeckel ist, auf.

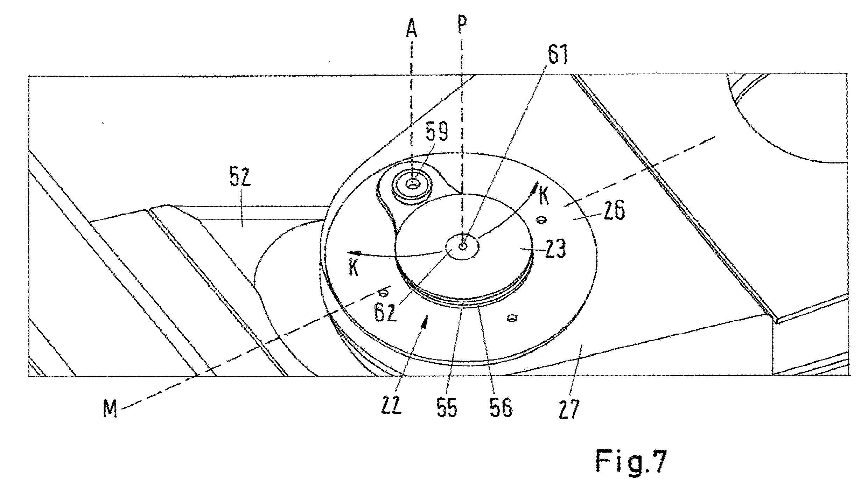

Das Lager 22 ist in Gänze um den Lagerbolzen 59 bzw. die mit A gekennzeichnete Achse schwenkbar. Die vertikale Achse A ist seitlich zur Mittelachse P des Zapfens 25 angeordnet. Anders ausgedrückt ist die vertikale Achse A exzentrisch zur Mittelachse P des Zapfens 25 angeordnet, welche die Drehachse der Drehscheibe 2 definiert. Die Ansicht der Fig. 6 ist ein Schnitt senkrecht zur Längsrichtung L des ersten und zweiten Fahrzeugteils, sodass der Blick des Betrachters in Längsrichtung geht. Somit ist die Achse A erkennbar in Richtung einer der Seitenwände angeordnet, ausgehend von der Mittelachse P des Zapfens 25. Die Seitenwände des Fahrzeugs würden sich in der Fig. 6 auf der rechten und der linken Seite der Fig. 6 befinden, sind aber in der Fig. 6 nicht gezeigt. Eine Seitenwand ist im Bereich der Schienenfahrzeugbrücke üblicherweise aus eine flexiblen Struktur, wie z.B. einem Falten-Balg, gebildet. Ausgehend von der Mittelachse P des Zapfens 25 ist die Achse A somit in Richtung der bezogen auf Fig. 6 rechten Seitenwand angeordnet. Die Achse A und die Mittelachse P des Zapfens 25 sind zueinander parallel. Die vom zweiten Gelenk 22 beschriebene Schwenkbewegung wird anhand der Fig. 7 erläutert.

Zusätzlich zu den vorherigen Darstellungen eines Zapfens 25 weist der Zapfen 25 in der Fig. 6 ein Gelenklager 60 auf, das den Zapfen umgibt.

Die Fig. 7 zeigt die Anordnung nach Fig. 6, nach Entnahme der Drehscheibe 2 und Entnahme des Zapfens 25 in einer Draufsicht. Bei Entnahme der Drehscheibe muss der Zapfen 25 je nach Ausführungsform nicht aus der Drehscheibe 2 entnommen werden. Er kann auch mitsamt dem Gelenklager 60 in der Drehscheibe verbleiben. Zu sehen ist das Loch 61 im Vorsprung 62 der Platte 55. Das Loch 61 dient zur Befestigung des Zapfens 25 mit der Schraube 33 an der Platte 55 (vgl. Fig. 6). Erkennbar ist ferner die gleitende Auflage des Lagers 22 mit dem zweiten Gleitelement 56 auf der Oberfläche des Gelenkpfannendeckels 26. Das Lager 22 ist um den Bolzen 59 bzw. die Achse A schwenkbar auf dem Gelenkpfannendeckel 26 angeordnet. Die Achse A ist von der Mittelachse M des Fahrzeugs seitlich beabstandet. Das Lager 22 ist in Richtung des ersten Fahrzeugteils oder in Richtung des zweiten Fahrzeugteils horizontal um die Achse A schwenkbar und kann eine kreisbogenförmige Bewegung vollziehen. Die Bewegungsrichtung des Lagers 22 in Richtung des ersten Fahrzeugteils (rechts im Bild) und des zweiten Fahrzeugteils (links im Bild) ist durch die Pfeile K angedeutet. Durch das bewegliche Lager 22 kann die Schienenfahrzeugbrücke bzw. die Drehscheibe Bewegungen besser nachvollziehen, die bei der Fahrt des Fahrzeuges über eine Kuppe oder durch eine Senke auftreten.

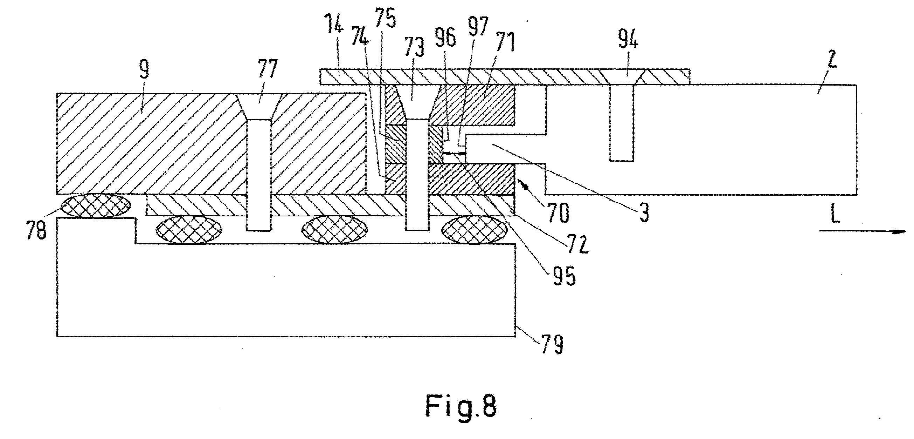

Die Fig. 8 zeigt, wie die Drehscheibe 2 an ihrem ersten Rand 3 im der Führung 70 geführt wird. Die Führung 70 hat im Querschnitt ein C-Profil. Die Führung weist ein drittes Gleitelement 71, hier in Form einer Gleitleiste, auf. Das dritte Gleitelement ist mit einer Schraube 73 an einer Befestigungsplatte 72 befestigt und bildet den oberen Schenkel eines C-Profils. In der hier gezeigten Ausführungsform weist die Führung 70 auch noch ein viertes Gleitelement 74, hier in Form einer Gleitleiste, auf. Das vierte Gleitelement 74 ist vertikal nach unten von dem dritten Gleitelement 71 beabstandet. Das vierte Gleitelement ist ebenfalls mit der Schraube 73 an der Befestigungsplatte 72 befestigt bildet den unteren Schenkel des C-Profils der Führung. Das vierte Gleitelement 74 ist vom dritten Gleitelement 71 durch den Abstandshalter 75 getrennt, der den senkrechten, mittleren Schenkel des C-Profils bildet. Zwischen dem dritten Gleitelement 71 und dem vierten Gleitelement 74 ist ein Zwischenraum gebildet, in dem der erste Rand 3 der Drehscheibe 2 geführt ist. Das dritte Gleitelement 71 und das vierte Gleitelement 74 umgreifen den Rand 3, der eine geringere Dicke aufweist als der Rest der Drehscheibe 2 und in Form eines Vorsprungs ausgebildet ist. Die Befestigungsplatte 72, an der die Gleitelemente 71, 74 der Führung 70 befestigt sind, ist ihrerseits mit Schrauben 77 (nur eine gezeigt) unter der Bodenplatte 9 des ersten Fahrzeugteils befestigt. Eine Abdeckleiste 14 ist mit Schrauben 94 (nur eine gezeigt) an der Drehscheibe 2 befestigt.

Der Zusammenbau aus Bodenplatte 9, Befestigungsplatte 72 und Führung 70 ist mit Klebeverbindungen 78 auf das Untergestell 79 des ersten Fahrzeugteils geklebt. Bei der Demontage der Drehscheibe 2 wird diese in Längsrichtung L verschoben und aus dem ersten Lager 70 durch Herausziehen entnommen. Zwischen der Stirnseite 96 des Abstandhalters 75 und der Stirnseite 97 des Randes 3 der Drehscheibe 2 ist ein Spalt erkennbar, dargestellt durch den Pfeil 95. Er dient unter anderem dazu, eine Nickbewegung der verbundenen Fahrzeugteile zu erleichtern. Auch zwischen dem Rand 3 und dem dritten Gleitelement 71 ist ein Spalt vorgesehen, um insbesondere eine Nickbewegung zu erleichtern. Auf dem vierten Gleitelement 74 liegt die Drehscheibe 2 mit dem Rand 3 auf, kann aber während der Fahrt auch zeitweise abheben.

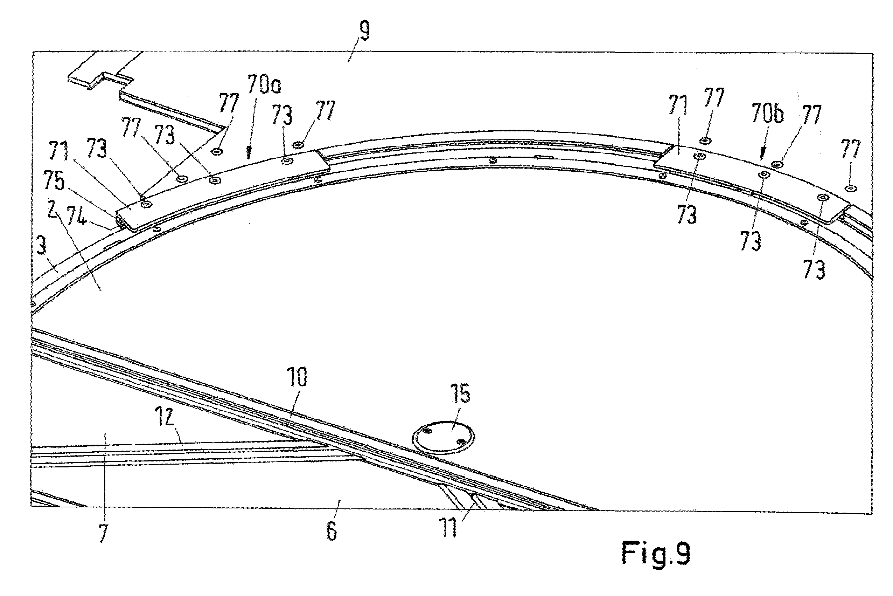

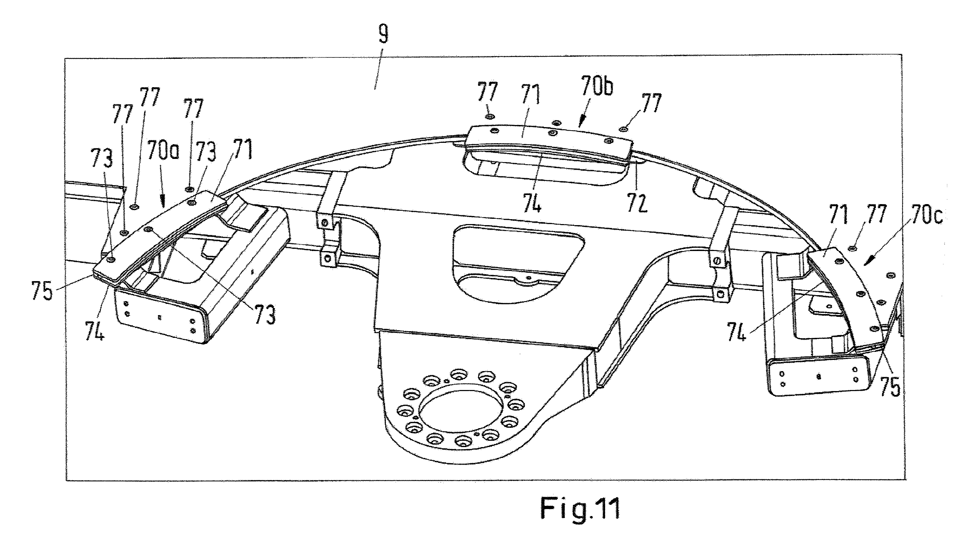

Die Fig. 9 zeigt einen Teil einer Schienenfahrzeugbrücke. Im Vergleich zur Darstellung der Fig. 1 ist die Abdeckleiste 14 (s. Fig. 1) entfernt. Die Führung 70, die am ersten Fahrzeugteil angeordnet ist, und in welcher der erste Rand 3 der Drehscheibe 2 drehbar zur Bodenplatte 9 des ersten Fahrzeugteils geführt ist, ist sichtbar. Die Führung ist aus drei Teilelementen 70a, 70b, 70c gebildet. In der Fig. 9 sind nur die Teilelemente 70a und 70b abgebildet. Auf der rechten Seite des kreisbogenförmigen Rands der Bodenplatte 9 ist ein weiteres Teilelement 70c angeordnet, spiegelsymmetrisch zum links in der Fig. 9 abgebildeten Teilelement 70a (s. Fig. 11).

Jedes Teilelement 70a, 70b, 70c weist ein drittes Gleitelement 71, ein viertes Gleitelement 74, beide in Form einer Gleitleiste aus Kunststoff, und einen Abstandhalter 75 auf. Die Anordnung dieser Elemente ist im Querschnitt in der Fig. 8 gezeigt und wurde dort bereits erläutert. Die Teilelemente 70a, 70b, 70c der Führung 70 sind an einem kreisbogenförmigen Ausschnitt der Bodenplatte 9 angeordnet und umfassen teilweise einen kreisbogenförmigen Rand 3 der Drehscheibe 2. Die Teilelemente 70a, 70b und 70c erstrecken sich nur teilweise auf einem Kreisbogen, d.h. zwischen den Teilelementen existieren Zwischenräume, in denen der Rand 3 zu erkennen ist. Die drei Teilelemente 70a, 70b, 70c umspannen einen Kreisbogen von etwa 140°. Alle weiteren Bezugszeichen in der Fig. 9 wurden schon in vorangehenden Figuren erläutert.

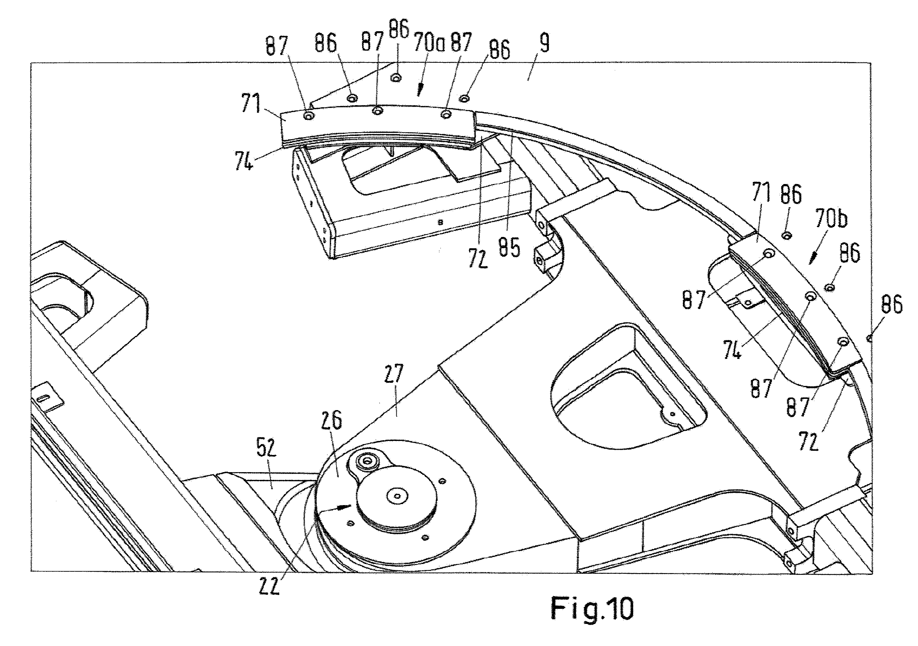

Fig. 10 zeigt einen Teil einer Schienenfahrzeugbrücke nach Demontage der Drehscheibe, wobei die Perspektive ähnlich ist wie in Fig. 9. Erkennbar ist im rechten Teil der Fig. 10 ein Teil des Untergestells des ersten Fahrzeugteils und die Gelenkverbindung zwischen den beiden Fahrzeugteilen. Über der Gelenkverbindung ist das Lager 22 erkennbar, das auf einer horizontal verlaufenden Platte 26 aufliegt. Diese Anordnung und Details davon wurden bereits in der Fig. 7 erläutert.

Erkennbar sind in der Fig. 10 die Befestigungsplatten 72 der Führung 70. Die Befestigungsplatten 72 sind so an der Unterseite der Bodenplatte 9 angebracht, dass ein Teil der Befestigungsplatten horizontal über den Rand 85 der Bodenplatte 9 hervorsteht. Die Befestigung der Befestigungsplatten an der Bodenplatte erfolgt durch eine Schraubverbindung durch die Schraubenlöcher 86. Die Verschraubung mit Schrauben 77 ist in Fig. 9 gezeigt. Auf der Oberseite des hervorstehenden Teils der Befestigungsplatten 72 sind die Teilelemente 70a, 70b, 70c der Führung befestigt (70c nicht gezeigt). Die Befestigung der Teilelemente 70a, 70b, 70c der Führung auf den Befestigungsplatten 72 erfolgt, wie in Fig. 9, durch eine Schraubverbindung. Die in Fig. 9 gezeigten Schrauben 73 sind entnommen und die Schraubenlöcher 87 sind zu sehen.

In der Fig. 11 ist auch das dritte Teilelement 70c der Führung zu sehen und die Gesamtanordnung aus den Teilelementen Teilelemente 70a, 70b, 70c der Führung in einem Kreisbogen.

## Patentansprüche

1. Schienenfahrzeugbrücke (1) zur Überbrückung eines Übergangs zwischen einem ersten Fahrzeugteil und einem zweiten Fahrzeugteil, die durch ein Gelenk (32) miteinander verbunden sind, wobei die Schienenfahrzeugbrücke
- eine Drehscheibe (2), mit einem ersten Rand (3) und einem zweiten Rand (4),
- eine Führung (70), die am ersten Fahrzeugteil anordenbar ist, und in welcher der erste Rand (3) der Drehscheibe (2) drehbar zum ersten Fahrzeugteil geführt ist,
- mindestens eine Brückenplatte (5, 6, 7), die mit dem zweiten Rand (4) der Drehscheibe verbunden ist,
aufweist,
wobei
- die Drehscheibe (2) auf einer ersten Gleitfläche (31) eines unter der Drehscheibe und am ersten Fahrzeugteil anordenbaren Lagers (22) aufliegt und auf der ersten Gleitfläche des Lagers drehbar gelagert ist,
**dadurch gekennzeichnet, dass**
nach Ausbau der Brückenplatte(n) (5, 6, 7) die Drehscheibe auf der ersten Gleitfläche (31) des Lagers (22) verschiebbar und dadurch aus der Führung (70) entnehmbar ist.

2. Schienenfahrzeugbrücke nach Anspruch 1, wobei die Drehscheibe an ihrem zweiten Rand (4) über eine Steckverbindung mit der mindestens einen Brückenplatte (5, 6, 7) verbunden ist, und wobei nach Lösen der Steckverbindung und Anheben und/oder Ausbau der Brückenplatte(n) die Drehscheibe auf der ersten Gleitfläche (31) des Lagers (22) verschiebbar und dadurch aus der Führung (70) entnehmbar ist.

3. Schienenfahrzeugbrücke nach Anspruch 1 oder 2, aufweisend ein Führungselement (25) zur Führung einer Drehbewegung der Drehscheibe (2) auf dem Lager (22).

4. Schienenfahrzeugbrücke nach einem der Ansprüche 1-3, bei der
- das Lager (22) einen Zapfen (25) als Führungselement aufweist, der am Lager an höherer Position als die erste Gleitfläche (31) angeordnet ist und der demontierbar ist, um nach Lösen der Steckverbindung und Anheben und/oder Ausbau der Brückenplatte(n) (5, 6, 7) ein Verschieben der Drehscheibe (2) und ein Entnehmen der Drehscheibe aus der am ersten Fahrzeugteil angeordneten Führung (70) zu ermöglichen, und
- die Drehscheibe (2) ein Loch (21) aufweist, in das der Zapfen eingreift, wobei die Drehscheibe um den Zapfen drehbar gelagert ist.

5. Schienenfahrzeugbrücke nach einem der Ansprüche 1-4, bei der die Drehscheibe im montierten Zustand auf der ersten Gleitfläche des Lagers verschiebbar ist, um eine Nickbewegung des ersten und des zweiten Fahrzeugteils relativ zueinander zu ermöglichen.

6. Schienenfahrzeugbrücke nach Anspruch 5 und Anspruch 4, bei der das Loch in der Drehscheibe (2) ein in Längsrichtung (L) des zweiten Fahrzeugteils ausgerichtetes Langloch (51) ist.

7. Schienenfahrzeugbrücke nach einem der vorangehenden Ansprüche, insbesondere nach Anspruch 1-4, bei der das Lager (22) zusammen mit der Drehscheibe (2) verschiebbar oder verschwenkbar ist, um eine Nickbewegung des ersten und des zweiten Fahrzeugteils relativ zueinander zu ermöglichen.

8. Schienenfahrzeugbrücke nach Anspruch 7, bei der das Lager (22)
• eine zweite Gleitfläche (57) aufweist, mit der es auf einer Oberfläche (58) einer unter dem Lager angeordneten, horizontal verlaufenden Platte (26) gleitend aufliegt und
• um eine seitlich zur Mittelachse (P) des Zapfens (25) angeordnete vertikale Achse (A) kreisbogenförmig in Richtung des ersten Fahrzeugteils oder in Richtung des zweiten Fahrzeugteils horizontal schwenkbar angeordnet ist.

9. Schienenfahrzeugbrücke nach einem der vorangehenden Ansprüche, bei der die Steckverbindung zwischen der Drehscheibe (2) und der Brückenplatte (5,6,7) über ein elastisches Verbindungselement (10) erfolgt, das zwischen der Drehscheibe und der Brückenplatte angeordnet ist und die Drehscheibe und Brückenplatte miteinander verbindet.

10. Schienenfahrzeugbrücke nach Anspruch 9, bei der das Verbindungselement (10) ein elastisches Profil ist, das die folgenden Merkmale aufweist:
- eine Basis (40), die in eine am zweiten Rand (4) der Drehscheibe (2) angebrachte Nut einsteckbar ist,
- eine nutförmige Ausnehmung (43) zur Aufnahme eines nach unten weisenden Schenkels (44) der Brückenplatte (6),
- optional eine erste Lippe (41) zur oberseitigen Abdeckung des zweiten Randes (4) der Drehscheibe (2), und
- eine zweite Lippe (42), die über dem nach unten weisenden Schenkel (44) der Brückenplatte (6), angeordnet ist und einen Rand der Brückenplatte oberseitig abdeckt.

11. Schienenfahrzeugbrücke nach einem der vorangehenden Ansprüche, bei der die Führung (70) mehrere in einer Ebene angeordnete dritte Gleitelemente (71) aufweist, wobei jedes dritte Gleitelement an einer Befestigungsplatte (72) befestigt ist, die mit der Bodenplatte (9) verbunden ist.

12. Schienenfahrzeugbrücke nach Anspruch 11, bei der die Führung (70) vierte Gleitelemente (74) aufweist, die von den dritten Gleitelementen (71) vertikal beabstandet angeordnet sind, so dass zwischen einem dritten Gleitelement (71) und einem vierten Gleitelement (74) ein Zwischenraum gebildet ist in dem der erste Rand (3) der Drehscheibe (2) geführt ist.

13. Schienenfahrzeug, aufweisend eine Schienenfahrzeugbrücke nach einem der Ansprüche 1-12.

## Claims

1. Rail vehicle bridge (1) for bridging a junction between a first vehicle part and a second vehicle part, which are connected to each other by a joint (32), wherein the rail vehicle bridge has
- a turntable (2), having a first edge (3) and a second edge (4),
- a guidance means (70), which can be arranged on the first vehicle part and in which the first edge (3) of the turntable (2) is guided in a rotatable manner with respect to the first vehicle part,
- at least one bridge plate (5, 6, 7), which is connected to the second edge (4) of the turntable,
wherein,
- the turntable (2) rests on a first sliding surface (31) of a bearing (22) that can be arranged underneath the turntable and on the first vehicle part, and is mounted in a rotatable manner on the first sliding surface of the bearing,
**characterised in that**,
after installation of the bridge plate(s) (5, 6, 7), the turntable can be moved on the first sliding surface (31) of the bearing (22) and thus can be removed from the guidance means (70).

2. Rail vehicle bridge according to claim 1, wherein the turntable is connected to the at least one bridge plate (5, 6, 7) at its second edge (4) via a plug connection, and wherein, after releasing the plug connection and raising and/or installing the bridge plate(s), the turntable can be moved on the first sliding surface (31) of the bearing (22) and thus can be removed from the guidance means (70).

3. Rail vehicle bridge according to claim 1 or 2, having a guide element (25) to control a rotational movement of the turntable (2) on the bearing (22).

4. Rail vehicle bridge according to one of claims 1 to 3, wherein
- the bearing (22) has a pin (25) as a guide element, which is arranged on the bearing at a higher position than the first sliding surface (31) and which can be disassembled to enable a movement of the turntable (2) and a removal of the turntable from the guidance means (70) arranged on the first vehicle part, after the release of the plug connection and raising and/or assembly of the bridge plate(s) (5, 6, 7), and
- the turntable (2) has a hole (21), with which the pin engages, wherein the turntable is mounted in a rotatable manner around the pin.

5. Rail vehicle bridge according to one of claims 1 to 4, wherein the turntable can be moved, in the assembled state, on the first sliding surface of the bearing, in order to enable a pitching movement of the first and the second vehicle part relative to each other.

6. Rail vehicle bridge according to claim 5 and claim 4, wherein the hole in the turntable (2) is a longitudinal hole (51) configured in the longitudinal direction (L) of the second vehicle part.

7. Rail vehicle bridge according to one of the preceding claims, in particular according to claims 1 to 4, wherein the bearing (22), together with the turntable (2), can be moved or swivelled in order to enable a pitching movement of the first and the second vehicle part relative to each other.

8. Rail vehicle bridge according to claim 7, wherein the bearing (22)
- has a second sliding surface (57), with which it rests in a sliding manner on a surface (58) of a plate (26), which runs horizontally, arranged underneath the bearing, and
- is arranged around an vertical axis (A) arranged laterally with respect to the central axis (P) of the pin (25) in an arc-like manner in the direction of the first vehicle part, or is arranged to be able to be swivelled horizontally in the direction of the second vehicle part.

9. Rail vehicle bridge according to one of the preceding claims, wherein the plug connection between the turntable (2) and the bridge plate (5, 6, 7) is carried out via an elastic connecting element (10), which is arranged between the turntable and the bridge plate and which connects the turntable and the bridge plate to each other.

10. Rail vehicle bridge according to claim 9, wherein the connecting element (10) is an elastic profile that has the following features:
- a base (40), which can be inserted into a groove applied to the second edge (4) of the turntable (2),
- a groove-like recess (43) for receiving a limb (44) of the bridge plate (6) that is pointing downwards,
- optionally, a first lip (41) for covering the second edge (4) of the turntable (2) on the upper side, and
- a second lip (42), which is arranged above the downward-pointing limb (44) of the bridge plate (6) and covers an edge of the bridge plate on the upper side.

11. Rail vehicle bridge according to one of the preceding claims, wherein the guidance means (70) has several third sliding elements (71) arranged in a plane, wherein each third sliding element is fastened to a fastening plate (72) that is connected to the base plate (9).

12. Rail vehicle bridge according to claim 11, wherein the guidance means (70) has fourth sliding elements (74) that are arranged with vertical separation from the third sliding elements (71), such that an intermediate space is formed between a third sliding element (71) and a fourth sliding element (74), in which space the first edge (3) of the turntable (2) is guided.

13. Rail vehicle having a rail vehicle bridge according to one of claims 1 to 12.

## Revendications

1. Passerelle de véhicule ferroviaire (1) servant à franchir un passage entre une première partie de véhicule et une deuxième partie de véhicule, lesquelles sont reliées l'une à l'autre par une articulation (32), sachant que la passerelle de véhicule ferroviaire présente
- un plateau tournant (2) doté d'un premier bord (3) et d'un deuxième bord (4),
- un système de guidage (70), qui peut être disposé au niveau de la première partie de véhicule et dans lequel le premier bord (3) du plateau tournant (2) est guidé de manière à pouvoir tourner par rapport à la première partie de véhicule,
- au moins une plaque de passerelle (5, 6, 7) qui est reliée au deuxième bord (4) du plateau tournant,
sachant que
- le plateau tournant (2) repose sur une première surface de glissement (31) d'un palier (22) pouvant être disposé sous le plateau tournant et au niveau de la première partie de véhicule
et est logé de manière à pouvoir tourner sur la première surface de glissement du palier,
**caractérisée en ce que**
le plateau tournant peut être déplacé par coulissement sur la première surface de glissement (31) du palier (22) et peut être ce faisant retiré du système de guidage (70) après la dépose de la/des plaque(s) de passerelle (5, 6, 7).

2. Passerelle de véhicule ferroviaire selon la revendication 1, sachant que le plateau tournant est relié au niveau de son deuxième bord (4) à la plaque de passerelle (5, 6, 7) au moins au nombre de une par l'intermédiaire d'un système d'assemblage par emboîtement, et sachant que le plateau tournant peut être déplacé par coulissement sur la première surface de glissement (31) du palier (22) et peut être de ce fait retiré du système de guidage (70) après avoir desserré le système d'assemblage par emboîtement et après avoir relevé et/ou déposé la/les plaque(s) de passerelle.

3. Passerelle de véhicule ferroviaire selon la revendication 1 ou 2, présentant un élément de guidage (25) servant à guider un mouvement de rotation du plateau tournant (2) sur le palier (22).

4. Passerelle de véhicule selon l'une quelconque des revendications 1 à 3, dans le cadre de laquelle
- le palier (22) présente en tant qu'élément de guidage un tourillon (25), qui est disposé au niveau du palier en une position plus haute que la première surface de glissement (31) et qui peut être démonté afin de permettre, après avoir desserré le système d'assemblage par emboîtement et avoir relevé et/ou déposé la/les plaque(s) de passerelle (5, 6, 7), un déplacement par coulissement du plateau tournant (2) et un retrait du plateau tournant du système de guidage (70) disposé au niveau de la première partie de véhicule, et
- le plateau tournant (2) présente un trou (21), avec lequel le tourillon vient en prise, sachant que le plateau tournant est logé de manière à pouvoir tourné autour du tourillon.

5. Passerelle de véhicule ferroviaire selon l'une quelconque des revendications 1 à 4, dans le cadre de laquelle le plateau tournant peut être déplacé par coulissement à l'état monté sur la première surface de glissement du palier afin de permettre un mouvement de tangage de la première partie de véhicule et de la deuxième partie de véhicule l'une par rapport à l'autre.

6. Passerelle de véhicule ferroviaire selon la revendication 4 et la revendication 5, dans le cadre de laquelle le trou dans le plateau tournant (2) est un trou oblong (51) orienté dans la direction longitudinale (L) de la deuxième partie de véhicule.

7. Passerelle de véhicule ferroviaire selon l'une quelconque des revendications précédentes, en particulier selon les revendications 1 à 4, dans le cadre de laquelle le palier (22) peut être déplacé par coulissement ou peut pivoter conjointement avec le plateau tournant (2) afin de permettre un mouvement de tangage de la première partie de véhicule et de la deuxième partie de véhicule l'une par rapport à l'autre.

8. Passerelle de véhicule ferroviaire selon la revendication 7, dans le cadre de laquelle le palier (22)
- présente une deuxième surface de glissement (57), par laquelle le palier repose de manière à glisser sur une surface (58) d'une plaque (26) disposée sous le palier, s'étendant de manière horizontale, et
- est disposé de manière à pouvoir pivoter de manière horizontale autour d'un axe (A) vertical disposé de manière latérale par rapport à l'axe médian (P) du tourillon (25) de manière à présenter une forme d'arc de cercle en direction de la première partie de véhicule ou en direction de la deuxième partie de véhicule.

9. Passerelle de véhicule ferroviaire selon l'une quelconque des revendications précédentes, dans le cadre de laquelle l'assemblage par emboîtement est effectué entre le plateau tournant (2) et la plaque de passerelle (5, 6, 7) par l'intermédiaire d'un élément d'assemblage (10) élastique, lequel est disposé entre le plateau tournant et la plaque de passerelle et relie ensemble le plateau tournant et la plaque de passerelle.

10. Passerelle de véhicule ferroviaire selon la revendication 9, dans le cadre de laquelle l'élément d'assemblage (10) est un profilé élastique, qui présente les caractéristiques suivantes :
- une base (40) qui peut être insérée dans une rainure pratiquée au niveau du deuxième bord (4) du plateau tournant (2),
- un évidement (43) présentant la forme d'une rainure, servant à recevoir une branche (44), dirigée vers le bas, de la plaque de passerelle (6),
- en option une première lèvre (41) servant à recouvrir côté supérieur le deuxième bord (4) du plateau tournant (2), et
- une deuxième lèvre (42) qui est disposée au-dessus de la branche (44), dirigée vers le bas, de la plaque de passerelle (6) et qui recouvre, côté supérieur, un bord de la plaque de passerelle.

11. Passerelle de véhicule ferroviaire selon l'une quelconque des revendications précédentes, dans le cadre de laquelle le système de guidage (70) présente plusieurs troisièmes éléments de glissement (71) disposés dans un plan, sachant que chaque troisième élément de glissement est fixé au niveau d'une plaque de fixation (72) qui est reliée à la plaque de fond (9).

12. Passerelle de véhicule ferroviaire selon la revendication 11, dans le cadre de laquelle le système de guidage (70) présente des quatrièmes éléments de glissement (74) qui sont disposés de manière espacée verticalement des troisièmes éléments de glissement (71) de sorte qu'est formé entre un troisième élément de glissement (71) et un quatrième élément de glissement (74) un espace intermédiaire, dans lequel est guidé le premier bord (3) du plateau tournant (2).

13. Véhicule ferroviaire, présentant une passerelle de véhicule ferroviaire selon l'une quelconque des revendications 1 à 12.
